# EUROPÄISCHE PATENTSCHRIFT

(11) **EP 3 857 523 B1**
(45) Veröffentlichungstag und Bekanntmachung des Hinweises auf die Patenterteilung: **04.01.2023**
(21) Anmeldenummer: 19778793.0
(22) Anmeldetag: 17.09.2019
(51) Int. Cl.: G07D 11/24, G07D 11/30, G07D 11/36

(54) **ANORDNUNG UND VERFAHREN ZUR BEARBEITUNG VON WERTDOKUMENTEN**
ARRANGEMENT AND METHOD FOR PROCESSING SECURITY DOCUMENTS
AGENCEMENT ET PROCÉDÉ DE TRAITEMENT DE DOCUMENTS DE VALEUR

(30) Priorität: 24.09.2018 DE 102018007564
(43) Veröffentlichungstag der Anmeldung: 04.08.2021
(73) Patentinhaber: Giesecke+Devrient Currency Technology GmbH, 81677 München (DE)
(72) Erfinder: JAKOBS, Andreas, 81673 München (DE)
(74) Vertreter: Giesecke + Devrient IP
(86) Internationale Anmeldenummer: PCT/EP2019/000269
(87) Internationale Veröffentlichungsnummer: WO 2020/064141

(56) Entgegenhaltungen:
- WO-A1-2006/094962
- DE-A1-102004 033 092
- US-A1- 2003 011 466

## Beschreibung

Die vorliegende Erfindung betrifft eine Anordnung und ein Verfahren zur Bearbeitung von Wertdokumenten, insbesondere von Banknoten, Gutscheinen, Tickets, Schecks.

Zur Aufnahme von Banknoten werden Wertdokumentbehälter verwendet, in denen die Wertdokumente, insbesondere Banknoten, in Deposits vorliegen. Unter Deposits soll dabei eine Menge von mindestens einer Banknote oder mehr verstanden werden, die einer bestimmten Person, einem Konto, einer Abrechnungseinheit usw. zugeordnet sind. Zudem können die Einheiten neben Banknoten auch Schecks, Gutscheine oder andere Wertdokumente umfassen. Die einzelnen Deposits werden vor der Bearbeitung mit einer Banknotenbearbeitungsvorrichtung für die maschinelle Bearbeitung vorbereitet und dazu in Wertdokumentbehälter gefüllt. Bei der Vorbereitung werden Informationen zu der Einzahlung, u.a. eine Deposit-Identifikation erfasst und für die Bearbeitung der Banknotenbearbeitungsvorrichtung zur Verfügung gestellt. Die Deposit-Identifikation kann mit Angaben über den Einzahler, einer Kontonummer, dem voraussichtlichen Wert des Deposits, einer eindeutige Transaktionsnummer usw. verknüpft sein.

Für die Trennung verschiedener Stapel von Wertdokumenten ist es aus der DE102009042891 A1 bekannt, Wertdokumentbehälter zu verwenden, die durch Trennelemente in mehrere Aufbewahrungsbereiche für Wertdokumente unterteilt sind. In die Behälter, die auf einer Seite offen sind, werden einer oder mehrere Wertdokumentstapel aus losen Wertdokumenten eingelegt. Zur Entnahme der Wertdokumente ist der Wertdokumentbehälter üblicherweise so angeordnet, so dass seine offene Seite nach oben weist und die Wertdokumente in dem Wertdokumentbehälter auf ihren Längskanten stehen. Um den Wertdokumentstapel durch einen Greifer automatisch aus dem Wertdokumentbehälter zu entnehmen, wird ein Greifer verwendet, der z.B. zwei rechenartige Greifelemente aus mehreren Greiffingern aufweist, die aufeinander zu und voneinander wegbewegt werden können, um den Wertdokumentstapel zu greifen, aus dem Wertdokumentbehälter zu entnehmen und von dem Wertdokumentbehälter entfernt abzulegen.

Um eine unterbrechungsfreie Bearbeitung durch die Banknotenbearbeitungsvorrichtung zu ermöglichen, werden die Deposits üblicherweise durch Trennkarten (z.B. Headerkarten) voneinander getrennt, die zwischen verschiedene Deposits eingelegt werden. Von der Banknotenbearbeitungsvorrichtung werden diese Trennkarten erkannt und damit auch der Anfang einer neuen Deposits. Die Trennkarten werden bei der Vorbereitung der Wertdokumente in den Wertdokumentbehälter zu Beginn und/oder am Ende des jeweiligen Deposits eingelegt.

Nachteilig an der Verwendung von Trennkarten ist es, wenn diese unmittelbar vor oder nach den zugehörigen Wertdokumenten durch die Wertdokumentbearbeitungsvorrichtung transportiert werden, dass es beim Vereinzeln, beim Transportieren oder beim Stapeln der Wertdokumente zu einem sogenannten cross-over-Fehler kommen kann, bei dem ein Wertdokument von einer Trennkarte überholt wird. Dadurch wird das überholte Wertdokument einem falschen Deposit zugeordnet, was nachträglich aufwändig korrigiert werden muss und ggf. eine wiederholte maschinelle Prüfung der Wertdokumente durch die Wertdokumentbearbeitungsvorrichtung nach sich zieht.

Eine Aufgabe der vorliegenden Erfindung ist es daher, die Verwendung von Headerkarten oder Trennkarten zu vermeiden. Diese Aufgabe wird durch die Merkmale der unabhängigen Ansprüche gelöst. Die abhängigen Ansprüche enthalten vorteilhafte Weiterbildungen der Erfindung.

Die Erfindung betrifft eine Anordnung zur Bearbeitung von Wertdokumenten, die vor ihrer Bearbeitung mittels einer Wertdokumentbearbeitungsvorrichtung, an einem Vorbereitungsplatz in einen Wertdokumentbehälter eingelegt werden. Der Wertdokumentbehälter ist (z.B. durch Trennelemente) in mehrere Aufbewahrungsbereiche für Wertdokumente unterteilt. Der Wertdokumentbehälter weist eine eindeutige Behälter-Identifikation auf, z.B. einen auf dem Wertdokumentbehälter enthaltenen Barcode, QR-Code oder ein RFID-Element, die den Wertdokumentbehälter eindeutig identifizierbar macht. Jedem Aufbewahrungsbereich eines Wertdokumentbehälters ist eine eindeutige Aufbewahrungsbereich-Identifikation zugeordnet. Der Wertdokumentbehälter, in dem die Wertdokumente verschiedener Deposits in verschiedenen Aufbewahrungsbereichen enthalten sind, wird nach der Vorbereitung der Wertdokumente von dem Vorbereitungsplatz zu der Wertdokumentbearbeitungsvorrichtung (z.B. zu einem Eingabemodul oder direkt in das Eingabefach der Wertdokumentbearbeitungsvorrichtung), transportiert.

Die Wertdokumente des jeweiligen Deposits werden am Vorbereitungsplatz aus einem oder mehreren Anlieferungsbehältern entnommen, die jeweils eine eindeutige Deposit-Identifikation aufweisen. Die Deposit-Identifikation kann durch einen auf dem Anlieferungsbehälter enthaltenen Barcode, QR-Code oder ein RFID-Element bereit gestellt werden und wird beim Erfassen der Deposit-Identifikation durch ein entsprechendes Lesegerät ausgelesen.

An dem Vorbereitungsplatz ist eine Überwachungseinrichtung vorhanden, die dazu eingerichtet ist, automatisch zu erfassen, in welchen oder in welche erste Aufbewahrungsbereiche des Wertdokumentbehälters die Wertdokumente eines ersten Deposits, die aus einem ersten Anlieferungsbehälter entnommen wurden, eingelegt werden, und in welchen oder in welche zweiten Aufbewahrungsbereiche des Wertdokumentbehälters die Wertdokumente eines zweiten Deposits, die aus einem zweiten Anlieferungsbehälter entnommen wurden, eingelegt werden.

Ferner kann am Vorbereitungsplatz optional eine erste Erfassungseinrichtung vorhanden sein (z.B. Barcode-/QR-Codeleser oder RFID-Leser, manuell bedient oder an Behälteraufnahme angebracht) und optional eine zweite Erfassungseinrichtung (Barcode-/QR-Codeleser oder RFID-Leser, manuell bedient oder an Behälteraufnahme angebracht). Die Überwachungseinrichtung oder die erste oder die zweite Erfassungseinrichtung ist dazu eingerichtet, eine erste Deposit-Identifikation des ersten Deposits und eine zweiten Deposit-Identifikation des zweiten Deposits zu erfassen, deren Wertdokumente in den Wertdokumentbehälter eingelegt werden. Und die Überwachungseinrichtung oder die erste Erfassungseinrichtung ist dazu eingerichtet, eine Behälter-Identifikation des am Vorbereitungsplatz angeordneten Wertdokumentbehälters zu erfassen.

Die Anordnung weist eine Protokolleinrichtung auf, die mit der Überwachungseinrichtung verbunden ist und ggf. mit der ersten Erfassungseinrichtung und ggf. mit der zweiten Erfassungseinrichtung verbunden ist. Außerdem weist die Anordnung eine Steuereinrichtung, die mit der Protokolleinrichtung verbunden ist und/oder eine Abrechnungseinrichtung, die mit der Protokolleinrichtung verbunden ist. Die Protokolleinrichtung ist dazu eingerichtet, die erste Deposit-Identifikation mit der Behälter-Identifikation und mit mindestens einer Aufbewahrungsbereich-Identifikation mindestens eines ersten Aufbewahrungsbereichs des Wertdokumentbehälters zu verknüpfen und die zweite Deposit-Identifikation mit der Behälter-Identifikation und mit mindestens einer Aufbewahrungsbereich-Identifikation mindestens eines (anderen) zweiten Aufbewahrungsbereichs des Wertdokumentbehälters zu verknüpfen und entsprechende Verknüpfungsinformationen zu erstellen. Die Protokolleinrichtung ist dazu eingerichtet, diese Verknüpfungsinformationen an die Steuereinrichtung bzw. an die Abrechnungseinrichtung zu übermitteln, aus denen hervorgeht, mit welcher Behälter-Identifikation und mit welcher mindestens einen Aufbewahrungsbereich-Identifikation die erste Deposit-Identifikation verknüpft ist und mit welcher Behälter-Identifikation und mit welcher mindestens einen Aufbewahrungsbereich-Identifikation die zweite Deposit-Identifikation verknüpft ist. Die Software der Steuereinrichtung bzw. der Abrechnungseinrichtung ist dazu eingerichtet, die in dem jeweiligen Aufbewahrungsbereich des jeweiligen Wertdokumentbehälters vorhandenen Wertdokumente mit Hilfe der von der Protokolleinrichtung übermittelten Verknüpfungsinformationen jeweils dem ersten oder dem zweiten Deposit zuzuordnen.

Der jeweiligen Behälter-Identifikation eines Wertdokumentbehälters ist für jeden seiner Aufbewahrungsbereiche eine eindeutige Aufbewahrungsbereich-Identifikation zugeordnet. Diese Zuordnung ist z.B. in der Software der Überwachungseinrichtung und in der Software der Protokolleinrichtung und in der Software der Steuereinrichtung bzw. der Abrechnungseinrichtung hinterlegt. Die jeweilige Aufbewahrungsbereich-Identifikation kann visuell am Wertdokumentbehälter sichtbar sein oder auch nicht.

Die Anordnung kann außerdem eine Identifikationseinrichtung aufweisen, die an dazu eingerichtet ist, die Behälter-Identifikation des Wertdokumentbehälters (erneut) zu erfassen und an die Steuereinrichtung zu übermitteln. Die Identifikationseinrichtung ist z.B. ein am Eingabefach der Wertdokumentbearbeitungsvorrichtung vorhandenes Lesegerät, ein manuell zu bedienendes Lesegerät an der Wertdokumentbearbeitungsvorrichtung oder ein Lesegerät eines Eingabemoduls der Wertdokumentbearbeitungsvorrichtung.

Die Erfindung betrifft auch ein Verfahren zur Bearbeitung von Wertdokumenten, bei dem an dem Vorbereitungsplatz ein Wertdokumentbehälter bereit gestellt wird, der in mehrere Aufbewahrungsbereiche für Wertdokumente unterteilt ist, wobei jedem der Aufbewahrungsbereiche eine Aufbewahrungsbereich-Identifikation zugeordnet ist. An dem Vorbereitungsplatz werden dabei folgende Schritte durchgeführt:
- Erfassen der Behälter-Identifikation des Wertdokumentbehälters mit Hilfe der Überwachungseinrichtung oder mit Hilfe der ersten Erfassungseinrichtung oder mit Hilfe der zweiten Erfassungseinrichtung,
- Erfassen der ersten Deposit-Identifikation eines ersten Deposits, dessen Wertdokumente in den Wertdokumentbehälter eingelegt werden sollen, mit Hilfe der Überwachungseinrichtung oder mit Hilfe der ersten Erfassungseinrichtung,
- Entnehmen der Wertdokumente des ersten Deposits aus dem Anlieferungsbehälter des ersten Deposits und Einlegen der Wertdokumente des ersten Deposits in mindestens einen ersten Aufbewahrungsbereich des Wertdokumentbehälters, wobei mit Hilfe der Überwachungseinrichtung automatisch erfasst wird, in welche oder in welchen der Aufbewahrungsbereiche des Wertdokumentbehälters die Wertdokumente des ersten Deposits eingelegt werden und wobei mit Hilfe einer Protokolleinrichtung die erste Deposit-Identifikation mit der mindestens einen Aufbewahrungsbereich-Identifikation des mindestens einen ersten Aufbewahrungsbereichs und mit der Behälter-Identifikation verknüpft wird,
- Erfassen der zweiten Deposit-Identifikation des zweiten Deposits, dessen Wertdokumente in den Wertdokumentbehälter eingelegt werden sollen, mit Hilfe der Überwachungseinrichtung oder mit Hilfe der ersten Erfassungseinrichtung oder mit Hilfe der zweiten Erfassungseinrichtung,
- Entnehmen der Wertdokumente des zweiten Deposits aus dem Anlieferungsbehälter des zweiten Deposits und Einlegen der Wertdokumente des zweiten Deposits in mindestens einen zweiten Aufbewahrungsbereich des Wertdokumentbehälters, wobei mit Hilfe der Überwachungseinrichtung automatisch erfasst wird, in welche oder in welchen der Aufbewahrungsbereiche des Wertdokumentbehälters die Wertdokumente des zweiten Deposits eingelegt werden und wobei mit Hilfe der Protokolleinrichtung die zweite Deposit-Identifikation mit der mindestens einen Aufbewahrungsbereich-Identifikation des mindestens einen zweiten Aufbewahrungsbereichs und mit der Behälter-Identifikation verknüpft wird

Der Wertdokumentbehälter wird dann zum weiteren Bearbeiten der Wertdokumente von dem Vorbereitungsplatz zu der Wertdokumentbearbeitungsvorrichtung transportiert, um die Wertdokumente des ersten und zweiten Deposits der Wertdokumentbearbeitungsvorrichtung zuzuführen. Die Protokolleinrichtung übermittelt Verknüpfungsinformationen an die Steuereinrichtung und/oder an die Abrechnungseinrichtung, anhand derer die Steuereinrichtung bzw. die die Abrechnungseinrichtung ableiten kann, mit welcher mindestens einen Aufbewahrungsbereich-Identifikation und mit welcher Behälter-Identifikation die erste Deposit-Identifikation verknüpft ist und mit welcher mindestens einen Aufbewahrungsbereich-Identifikation und welcher Behälter-Identifikation die zweite Deposit-Identifikation verknüpft ist.

Anhand der Zählergebnisse der Wertdokumentbearbeitungsvorrichtung für die aus dem jeweiligen Aufbewahrungsbereich entnommenen Wertdokumente und anhand der Zuordnung dieser Wertdokumente zum jeweiligen Deposit kann die Abrechnungseinrichtung eine Abrechnung der Wertdokumente des jeweiligen (ersten oder zweiten) Deposits durchführen, auf deren Basis z.B. eine Gutschrift an den Einzahler des jeweiligen Deposits veranlasst werden kann.

Alternativ oder zusätzlich kann die Steuereinrichtung dazu eingerichtet sein, das Eingeben der Wertdokumente des ersten und zweiten Deposits in die Wertdokumentbearbeitungsvorrichtung (das Einlegen in deren Eingabefach) und/oder das Zuführen der in die Wertdokumentbearbeitungsvorrichtung eingegebenen (in das Eingabefach eingelegten) Wertdokumente des ersten und zweiten Deposits zu einer Vereinzelungseinrichtung der Wertdokumentbearbeitungsvorrichtung in Abhängigkeit der Verknüpfungsinformationen zu steuern.

Zur Unterscheidung der Wertdokumenten der verschiedenen Deposits werden keine Trennkarten oder Headerkarten verwendet. Weder im Wertdokumentbehälter noch im Eingabefach ist den Wertdokumenten des jeweiligen Deposits eine Trennkarte oder Headerkarte beigelegt. Die Deposit-Zuordnung der Wertdokumente wird stattdessen dadurch sichergestellt, dass beim Einlegen der Wertdokumente in den Wertdokumentbehälter die Verknüpfungsinformationen erstellt werden und beim weiteren Bearbeiten der aus dem Wertdokumentbehälter entnommenen Wertdokumente auf diese Verknüpfungsinformationen zurückgegriffen wird, um die jeweiligen Wertdokumente dem richtigen Deposit zuzuordnen.

Ferner kann die Anordnung eine Entnahmeeinrichtung aufweisen, die zur Entnahme der Wertdokumente aus dem Wertdokumentbehälter und zum Eingeben der Wertdokumente in eine Wertdokumentbearbeitungsvorrichtung eingerichtet ist, z.B. zum Einlegen der Wertdokumente in das Eingabefach der Wertdokumentbearbeitungsvorrichtung. Die Entnahmeeinrichtung kann mit einem Sensor zu Detektion einer Aufbewahrungsbereich-Identifikation ausgestattet sein, die am jeweiligen Aufbewahrungsbereich (z.B. am Rand des Wertdokumentbehälters) vorhanden ist. Die Wertdokumentbearbeitungsvorrichtung weist eine Wertdokumentzuführeinrichtung auf, die dazu eingerichtet ist, die eingegebenen Wertdokumente einer Vereinzelungseinrichtung der Wertdokumentbearbeitungsvorrichtung zuzuführen. Die Wertdokumentzuführeinrichtung ist z.B. am oder im Eingabefach der Wertdokumentbearbeitungsvorrichtung angeordnet. Die vereinzelten Wertdokumente werden in der Wertdokumentbearbeitungsvorrichtung mit Hilfe von Sensoren geprüft, gezählt und dann ggf. sortiert. Die Entnahmeeinrichtung kann Teil der Wertdokumentbearbeitungsvorrichtung oder Teil eines Eingabemoduls der Wertdokumentbearbeitungsvorrichtung oder eine eigenständige Vorrichtung sein.

Als Entnahmeeinrichtung kann ein Greifer verwendet werden, der zur Entnahme von in dem Wertdokumentbehälter enthaltenen Wertdokumenten ausgebildet ist. Der Greifer ist so angeordnet, dass er einen aus dem Wertdokumentbehälter entnommenen Wertdokumentstapel in ein Eingabefach einer Wertdokumentbearbeitungsvorrichtung einlegen kann. Der Greifer weist z.B. kammartige Strukturen auf, die dazu ausgebildet sind, in freie Aussparungen der Trennelemente am Rand der Aufbewahrungsbereiche einzugreifen. Eine Greifersteuerung positioniert den Greifer in Abhängigkeit der jeweiligen Trennelementposition an einer Position über dem Wertdokumentbehälter, an der die Greiffinger des Greifers, an den Aussparungen des jeweiligen Trennelements in den Behälter eintauchen können. Alternativ zu einem Greifer kann zum Entnehmen der Wertdokumente aus dem Wertdokumentbehälter und Eingeben der Wertdokumente in das Eingabefach auch eine andere Entnahmeeinrichtung verwendet werden, z.B. ein Rechen oder eine lösbare Klammer.

Bei der Entnahme der Wertdokumente aus dem Wertdokumentbehälter können die Verknüpfungsinformationen dazu verwendet werden, aus dem jeweiligen Aufbewahrungsbereich des Wertdokumentbehälters die entnommenen Wertdokumente mit Hilfe der Verknüpfungsinformationen dem ersten und zweiten Deposit zuzuordnen. Für die von der Identifikationseinrichtung festgestellte Behälter-Identifikation stellt die Steuereinrichtung anhand der von der Protokolleinrichtung übermittelten Verknüpfungsinformationen fest, in welche/n der Aufbewahrungsbereiche des Wertdokumentbehälters die Wertdokumente des ersten und in welche/n der Aufbewahrungsbereiche die Wertdokumente des zweiten Deposits enthalten sind.

Die Steuereinrichtung, die die Verknüpfungsinformationen von der Protokolleinrichtung erhält, kann die eine Steuereinrichtung der Entnahmeeinrichtung sein, die dazu eingerichtet ist, die Entnahmeeinrichtung so zu steuern, dass das Eingeben der Wertdokumente des ersten und zweiten Deposits in die Wertdokumentbearbeitungsvorrichtung in Abhängigkeit der Verknüpfungsinformationen durchgeführt wird.

Die Steuereinrichtung, die die Verknüpfungsinformationen von der Protokolleinrichtung erhält, kann aber auch eine Steuereinrichtung der Zuführeinrichtung sein, die dazu eingerichtet ist, die Zuführeinrichtung so zu steuern, dass das Zuführen der in die Wertdokumentbearbeitungsvorrichtung eingegebenen Wertdokumente des ersten und zweiten Deposits zu der Vereinzelungseinrichtung der Wertdokumentbearbeitungsvorrichtung in Abhängigkeit der Verknüpfungsinformationen durchgeführt wird.

Die Steuereinrichtung kann dazu eingerichtet sein, das Eingeben der Wertdokumente des ersten und zweiten Deposits in die Wertdokumentbearbeitungsvorrichtung und/oder das Zuführen der in die Wertdokumentbearbeitungsvorrichtung eingegebenen Wertdokumente des ersten und zweiten Deposits zu der Vereinzelungseinrichtung der Wertdokumentbearbeitungsvorrichtung in Abhängigkeit der Verknüpfungsinformationen zu steuern, insbesondere derart zu steuern, dass alle Wertdokumente desselben Deposits (alle Wertdokumente des ersten Deposits bzw. alle des zweiten Deposits) beim Eingeben bzw. Zuführen miteinander zusammengeführt und zu einem einzigen Wertdokumentstapel vereinigt werden, aber die Wertdokumente des ersten Deposits beim Eingeben bzw. Zuführen nicht mit den Wertdokumenten des zweiten Deposits zusammengeführt werden, sondern die Wertdokumente der verschiedenen Deposits voneinander getrennt bleiben, damit sie nicht miteinander vermischt werden.

Insbesondere ist die Steuereinrichtung dazu eingerichtet, die Zuführeinrichtung dazu zu veranlassen, dass diese beim Zuführen der Wertdokumente des ersten Deposits und des darauffolgenden zweiten Deposits zu der Vereinzelungseinrichtung, die Wertdokumente des ersten Deposits und die Wertdokumente des zweiten Deposits voneinander getrennt lässt bis das letzte Wertdokument des ersten Deposits durch die Vereinzelungseinrichtung aus dem Eingabefach abgezogen worden ist.

Die Entnahmeeinrichtung wird z.B. durch ein Eingabemodul der Wertdokumentbearbeitungsvorrichtung bereit gestellt, welches zur Eingabe der Wertdokumente aus dem Wertdokumentbehälter in die Wertdokumentbearbeitungsvorrichtung eingerichtet ist. Das Eingabemodul kann auch eine Behälteraufnahme zur Aufnahme des Wertdokumentbehälters aufweisen, aus dem die Entnahmeeinrichtung die Wertdokumente entnimmt. Auch die Identifikationseinrichtung kann ein Bestandteil des Eingabemoduls sein und dazu eingerichtet sein, die Behälter-Identifikation des Wertdokumentbehälters zu erfassen und an die Steuereinrichtung des Eingabemoduls zu übermitteln. Die Identifikationseinrichtung des Eingabemoduls kann an die Behälteraufnahme angeordnet sein, sie kann aber auch außerhalb der Behälteraufnahme in/an dem Eingabemodul angeordnet sein. Die Steuereinrichtung der Entnahmeeinrichtung kann eine Steuereinrichtung des Eingabemoduls sein, die mit der Protokolleinrichtung (kommunikativ) verbunden ist und dazu eingerichtet ist, für den Wertdokumentbehälter, dessen Behälter-Identifikation die Identifikationseinrichtung des Eingabemoduls erfasst hat, anhand der (von der Protokolleinrichtung übermittelten) Verknüpfungsinformationen für jeden Aufbewahrungsbereich des jeweiligen Wertdokumentbehälters festzustellen, mit jeweils welcher Deposit-Identifikation die jeweilige Aufbewahrungsbereich-Identifikation verknüpft ist, d.h. in welchen der Aufbewahrungsbereiche des Wertdokumentbehälters die Wertdokumente des ersten Deposits enthalten sind und in welchen der Aufbewahrungsbereiche des Wertdokumentbehälters die Wertdokumente des zweiten Deposits enthalten sind.

Das Eingabemodul kann an eine Wertdokumentbearbeitungsvorrichtung so angeschlossen werden, dass Wertdokumentstapel durch die Entnahmeeinrichtung aus dem Eingabemodul heraus in die Wertdokumentbearbeitungsvorrichtung eingelegt werden können. Das Eingabemodul kann einen Greifer zur Entnahme von in dem Wertdokumentbehälter enthaltenen Wertdokumenten aufweisen und eine Steuerung zum Steuern der Bewegung des Greifers. Die Greifersteuerung ist dazu ausgebildet, zur Entnahme von Wertdokumenten aus dem Wertdokumentbehälter die Bewegung des Greifers, derart zu steuern, dass der Greifer an einer Position über dem jeweiligen Aufbewahrungsbereich positioniert wird und dass der Greifer aus der Position in den Wertdokumentbehälter eintaucht, um Wertdokumente aus dem Wertdokumentbehälter zu entnehmen. Das Eingabemodul kann eine Behälteraufnahme aufweisen, die den Wertdokumentbehälter derart aufnimmt, dass dessen Relativposition zu dem Greifer vorbestimmt und reproduzierbar ist. Die Behälteraufnahme kann für ein manuelles Einlegen des Wertdokumentbehälters ausgebildet sein. Vorzugsweise weist die Behälteraufnahme einen Verdrehschutz auf, damit der Wertdokumentbehälter nur in der richtigen Orientierung in die Behälteraufnahme eingelegt werden kann. Damit wird die richtige Position der Aufbewahrungsbereiche sichergestellt. Gegebenenfalls weist das Eingabemodul mehrere Behälteraufnahmen auf, damit die Vorrichtung gleichzeitig mehrere mit Wertdokumenten beladene Wertdokumentbehälter aufnehmen kann.

Alternativ zu einem Eingabemodul kann das Eingabefach der Wertdokumentbearbeitungsvorrichtung dazu eingerichtet sein, dass der Wertdokumentbehälter direkt in dem Eingabefach aufgenommen wird, wobei auch die Identifikationseinrichtung am oder im Eingabefach vorhanden ist. Die Entnahmeeinrichtung, z.B. ein Greifer oder Rechen, kann durch die Wertdokumentbearbeitungsvorrichtung oder von außen zur Verfügung gestellt sein.

Die Steuereinrichtung der Entnahmeeinrichtung ist dazu eingerichtet, die Entnahmeeinrichtung so zu steuern, dass diese die Wertdokumente des ersten Deposits und des zweiten Deposits aus dem Wertdokumentbehälter entnimmt und voneinander getrennt in ein Eingabefach der Wertdokumentbearbeitungsvorrichtung einlegt. Dies kann dadurch erfolgen, dass die Wertdokumente der verschiedenen Deposits voneinander getrennt auf zwei verschiedene Aufnahmen der Zuführeinrichtung aufgelegt werden. Oder die Wertdokumente des ersten und zweiten Deposits werden zeitlich voneinander getrennt auf dieselbe Aufnahme aufgelegt, wobei die Wertdokumente des zweiten Deposits erst in das Eingabefach eingelegt werden, nachdem das letzte Wertdokument des ersten Deposits mit Hilfe der Vereinzelungseinrichtung aus dem Eingabefach abgezogen worden ist.

In einem ersten bevorzugten Ausführungsbeispielwird das Eingeben der Wertdokumente in die Wertdokumentbearbeitungsvorrichtung in Abhängigkeit der Verknüpfungsinformationen durchgeführt. Dabei werden die Wertdokumente desselben Deposits schon beim Eingeben in die Wertdokumentbearbeitungsvorrichtung miteinander zusammengeführt und zu einem einzigen Wertdokumentstapel vereinigt. Das Zuführen der eingegebenen Wertdokumente zu der Vereinzelungseinrichtung kann dann ohne Berücksichtigung der Verknüpfungsinformationen durchgeführt werden.

Bei diesem Ausführungsbeispiel ist die Steuereinrichtung zur Steuerung der Entnahmeeinrichtung eingerichtet. Dabei steuert sie für den Wertdokumentbehälter, dessen Behälter-Identifikation die Identifikationseinrichtung erfasst hat, die Entnahmeeinrichtung derart, dass die Entnahmeeinrichtung das Eingeben der Wertdokumente in die Wertdokumentbearbeitungsvorrichtung in Abhängigkeit der Verknüpfungsinformationen durchführt. Dabei führt die Entnahmeeinrichtung alle Wertdokumente des ersten/ zweiten Deposits, die sie ggf. aus verschiedenen Aufbewahrungsbereichen des Wertdokumentbehälters entnimmt, bei der Eingabe in die Wertdokumentbearbeitungsvorrichtung miteinander zusammen, so dass sie zu einem einzigen Wertdokumentstapel vereinigt werden. Jedoch werden dabei die Wertdokumente des zweiten Deposits zeitlich oder räumlich getrennt von den Wertdokumenten des ersten Deposits in die Wertdokumentbearbeitungsvorrichtung eingelegt, damit sie nicht miteinander vermischt werden. Bei diesem Ausführungsbeispiel kann die Zuführeinrichtung ein einzige Aufnahme zur Zuführung von Wertdokumenten zu der Vereinzelungseinrichtung aufweisen, es können aber auch mehrere Aufnahmen verwendet werden.

Zum Beispiel weist die Wertdokumentzuführeinrichtung mindestens zwei Aufnahmen zur Zuführung von Wertdokumenten zu der Vereinzelungseinrichtung auf und die Entnahmeeinrichtung ist zum Auflegen der Wertdokumente auf die zwei Aufnahmen der Wertdokumentzuführeinrichtung eingerichtet. Die Steuereinrichtung steuert die Entnahmeeinrichtung derart, dass die Entnahmeeinrichtung das Auflegen der Wertdokumente auf die zwei Aufnahmen in Abhängigkeit der Verknüpfungsinformationen durchführt, wobei alle Wertdokumente des ersten Deposits, die ggf. aus verschiedenen Aufbewahrungsbereichen des Wertdokumentbehälters entnommen werden, beim Auflegen auf die erste Aufnahme miteinander zusammengeführt und zu einem einzigen Wertdokumentstapel vereinigt werden und alle Wertdokumente des zweiten Deposits, die ggf. aus verschiedenen Aufbewahrungsbereichen des Wertdokumentbehälters entnommen werden, beim Auflegen auf die zweite Aufnahme miteinander zusammengeführt und zu einem einzigen Wertdokumentstapel vereinigt werden (andere Aufnahme als die des ersten Deposits).

In einem zweiten bevorzugten Ausführungsbeispielwird das Eingeben der Wertdokumente in die Wertdokumentbearbeitungsvorrichtung unabhängig von der Verknüpfungsinformationen durchgeführt, aber das Zuführen der eingegebenen Wertdokumente zu der Vereinzelungseinrichtung wird in Abhängigkeit der Verknüpfungsinformationen durchgeführt. Dabei werden die Wertdokumente desselben Deposits, die aus verschiedenen Aufbewahrungsbereichen entnommen werden, nicht schon beim Eingeben in die Wertdokumentbearbeitungsvorrichtung miteinander zusammengeführt, sondern. zunächst voneinander getrennt in die Wertdokumentbearbeitungsvorrichtung eingegeben. Die Wertdokumente desselben Deposits werden dann aber beim Zuführen zu der Vereinzelungseinrichtung miteinander zusammengeführt und zu einem einzigen Wertdokumentstapel vereinigt.

Dazu wird im zweiten Ausführungsbeispiel eine Zuführeinrichtung verwendet, die dazu eingerichtet ist, die auf den beiden Aufnahmen aufgelegten Wertdokumente gegebenenfalls zu einem einzigen Wertdokumentstapel zu vereinigen. Die Steuereinrichtung der Zuführeinrichtung steuert die Zuführeinrichtung auf Basis der Verknüpfungsinformationen so, dass die Wertdokumente desselben Deposits, die aus verschiedenen Aufbewahrungsbereichen des Wertdokumentbehälters entnommen wurden, mit Hilfe der Zuführeinrichtung miteinander zusammengeführt und zu einem einzigen Wertdokumentstapel vereinigt werden. Im Vergleich zum ersten Ausführungsbeispiel ergeben sich hier keine Wartezeiten, die durch das Zusammenführen der Wertdokumente beim Einlegen bedingt sind.

Bei diesem Ausführungsbeispiel wird die Entnahmeeinrichtung so gesteuert, dass die Wertdokumente desselben Deposits, die die Entnahmeeinrichtung ggf. aus verschiedenen Aufbewahrungsbereichen des Wertdokumentbehälters entnimmt, bei der Eingabe in die Wertdokumentzuführeinrichtung noch nicht miteinander zusammengeführt werden. Das Auflegen der Wertdokumente durch die Entnahmeeinrichtung auf die zwei Aufnahmen der Wertdokumentzuführeinrichtung wird nicht in Abhängigkeit der Verknüpfungsinformationen durchgeführt, sondern alle Wertdokumente des jeweiligen Deposits, die aus verschiedenen Aufbewahrungsbereichen des Wertdokumentbehälters entnommen werden, unabhängig von ihrer Depositzugehörigkeit zunächst auf verschiedene Aufnahmen aufgelegt. Die Steuereinrichtung der Wertdokumentzuführeinrichtung ist dazu eingerichtet, auf Basis der Verknüpfungsinformationen zu entscheiden, ob die auf den beiden Aufnahmen aufgelegten Wertdokumente voneinander getrennt oder gemeinsam (als vereinigter Wertdokumentstapel) der Vereinzelungseinrichtung zugeführt werden. Die auf den beiden Aufnahmen aufgelegten Wertdokumente werden voneinander getrennt zugeführt, falls sie zu verschiedenen Deposits gehören, und gemeinsam zugeführt, falls sie zum selben Deposit gehören .

Die Überwachungseinrichtung kann eine Kamera aufweisen, die dazu eingerichtet ist, für jedes Deposit, vor und nach dem Einlegen der Wertdokumente des jeweiligen Deposits in den am Vorbereitungsplatz bereit gestellten Wertdokumentbehälter, ein Bild des Wertdokumentbehälters aufzunehmen. Die Überwachungseinrichtung ist z.B. dazu eingerichtet, für jedes eingelegten Deposit eine Differenzbildanalyse durchzuführen, bei anhand von Unterschieden zwischen den beiden Bildern des Wertdokumentbehälters, die vor und nach dem Einlegen des jeweiligen Wertdokumentstapels aufgenommen wurden, ermittelt wird, in welchen mindestens einen Aufbewahrungsbereich des Wertdokumentbehälters die Wertdokumente des jeweiligen Deposits eingelegt wurden.

Alternativ kann die Überwachungseinrichtung einen Lichtschrankenvorhang aus einer Vielzahl von Lichtschranken aufweisen, die am Vorbereitungsplatz neben dem für den Wertdokumentbehälter vorgesehenen Platz positioniert sind. Diese sind entlang einer Einlegerichtung angeordnet, entlang der die Wertdokumente in den Wertdokumentbehälter eingelegt werden. Ihre Lichtstrahlen verlaufen zueinander parallel und quer oder senkrecht zur Einlegerichtung und im Wesentlichen parallel zur Oberfläche des Wertdokumentbehälters. Anhand von (Unterbrechungs-)Signalen der Lichtschranken wird (z.B. durch die Protokolleinrichtung) ermittelt, in welchen mindestens einen Aufbewahrungsbereich des Wertdokumentbehälters die Wertdokumente des jeweiligen Deposits eingelegt wurden.

Alternativ kann die Überwachungseinrichtung mindestens einen Abstandssensor aufweisen, der an einem Behälterende des am Vorbereitungsplatz bereit gestellten Wertdokumentbehälters angeordnet ist und dessen Erfassungsbereich parallel zur Oberfläche des Wertdokumentbehälters (mindestens bis zum gegenüberliegenden Ende) verläuft. Der Abstandssensor ist dazu eingerichtet, den Abstand eines in seinem Erfassungsbereich eingetretenen Objekts (Wertdokumentstapels und/oder Hand einer Person) von dem Abstandssensor zu bestimmen. Anhand des bestimmten Abstands wird (z.B. durch die Protokolleinrichtung) ermittelt, in welchen Aufbewahrungsbereich des Wertdokumentbehälters die Wertdokumente des jeweiligen Deposits eingelegt wurden.

Nachfolgend wird die Erfindung beispielhaft anhand der folgenden Figuren erläutert. Es zeigen:
- Fig. 1a: einen Wertdokumentbehälter mit vier Aufbewahrungsbereichen,
- Fig. 1b: eine Vorrichtung zur Bearbeitung von Wertdokumenten mit einem daran angeschlossenen Eingabemodul,
- Fig. 1c: das Einlegen der Wertdokumente in eine Wertdokumentbearbeitungsvorrichtung durch ein Eingabemodul,
- Fig. 1d: einen Vorbereitungsplatz für Wertdokumente,
- Fig. 2: eine Anordnung zur Bearbeitung von Wertdokumenten mit Vorbereitungsplatz und Wertdokumentbearbeitungsvorrichtung,
- Fig. 3a-f: das Zusammenführen von Wertdokumenten desselben Deposits beim Einlegen gemäß dem ersten Ausführungsbeispiel,
- Fig. 4a-e: das Zusammenführen von Wertdokumenten desselben Deposits beim Zuführen gemäß dem zweiten Ausführungsbeispiel.

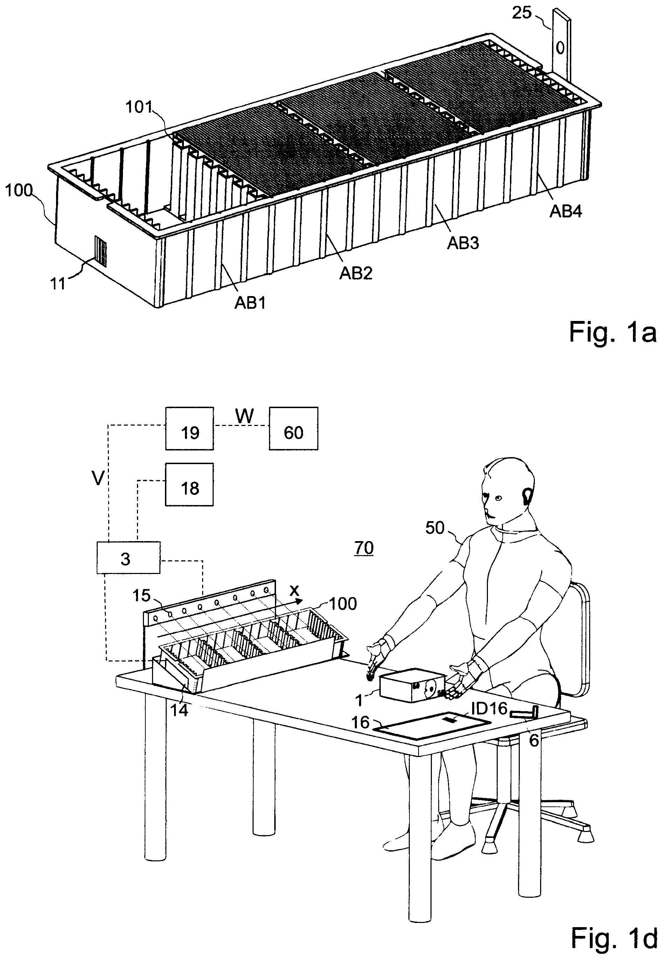

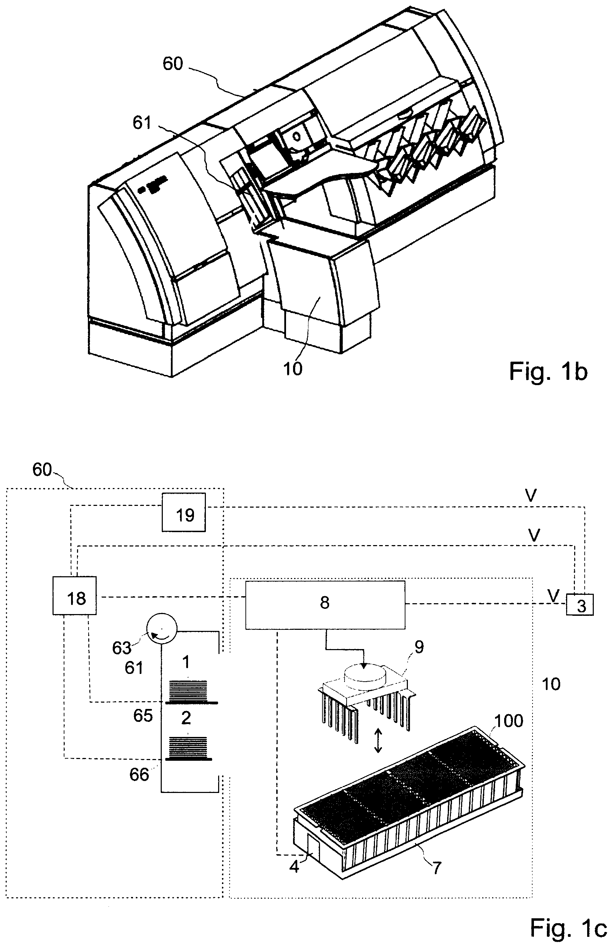

Figur 1a zeigt einen Wertdokumentbehälter 100 (nachfolgend nur mehr als Behälter bezeichnet) zur Aufnahme von Wertdokumenten, in dem die Wertdokumente 1 auf ihren Längskanten stehend eingelegt sind. Der Behälter 100 ist durch drei Trennelemente 101 in vier Aufbewahrungsbereiche unterteilt, in denen Wertdokumente getrennt voneinander aufbewahrt sind. Zur Entnahme der Wertdokumente wird ein Greifer 9 verwendet, vgl. Fig. 1c, der in den Behälter 100 abgesenkt wird, um den jeweiligen Wertdokumentstapel eines Aufbewahrungsbereichs zu entnehmen. Der Behälter 100 weist eine Identifikation auf, die z.B. in einem Barcode 11 kodiert ist, durch die der Behälter eindeutig identifizierbar ist. Zusätzlich oder alternativ kann der Behälter 100 als Identifikation einen Datenträger aufweisen, z.B. einen RFID-Transponder, in dem Informationen über die in dem Behälter enthaltenen Wertdokumente 1 gespeichert sind. Diese umfassen z.B. Informationen über den Einzahler des jeweiligen Wertdokumentstapels und ggf. über die Anzahl oder den Gesamtwert der Wertdokumente.

In Figur 1b ist eine Vorrichtung 60 zur Bearbeitung von Wertdokumenten dargestellt, an deren Eingabeseite ein Eingabemodul 10 angeschlossen ist. Das Eingabemodul 10 ist zur Eingabe von Wertdokumenten, z.B. Banknoten, in ein Eingabefach 61 der Vorrichtung 60 ausgebildet und weist zu diesem Zweck einen Greifer 9 auf, der einen Stapel von Wertdokumenten aus einem Behälter entnimmt und in ein Eingabefach 61 der Vorrichtung einlegt. Die in das Eingabefach eingegebenen Wertdokumente 1 werden anschließend mittels einer Zuführeinrichtung 65, 66 zu der Vereinzelungseinrichtung 63 transportiert, vgl. Fig. 1c. Die Vorrichtung 60 transportiert die vereinzelten Wertdokumente, prüft und ggf. sortiert diese und legt sie in eines oder mehrere Ausgabefächer der Vorrichtung 60 ab. Das Eingabemodul 10 kann zur Aufnahme eines oder mehrerer Behälter 100 ausgebildet sein.

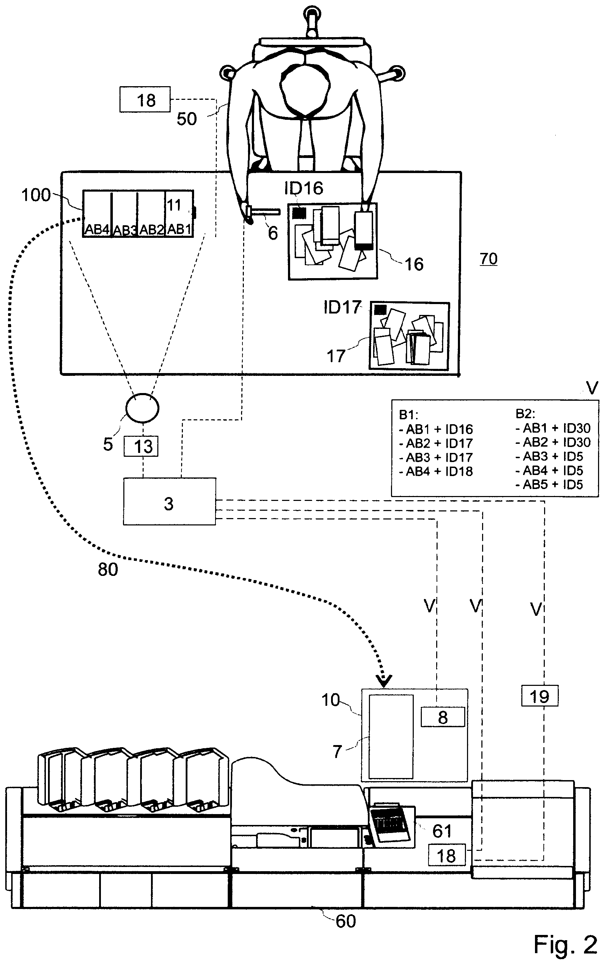

Im Eingabemodul 10 ist ein Greifer 9 enthalten, um Wertdokumente 1 stapelweise aus einem Aufbewahrungsbereich des Behälters 100 zu entnehmen und in das Eingabefach 61 der Vorrichtung 60 einzulegen. Der Behälter 100 wurde dazu manuell oder automatisch in eine Behälteraufnahme 7 des Eingabemoduls 10 eingelegt. Die Behälteraufnahme 7 kann mit einer Identifikationseinrichtung 4 ausgestattet sein, um die Identifikation des Behälters 100 zu bestimmen. Die einer Identifikationseinrichtung 4 übermittelt die Identifikation des jeweiligen Behälters 100 an eine Steuerungseinrichtung 8 des Eingabemoduls 10. Die Steuerungseinrichtung 8 ist mit einer Protokolleinrichtung 3 verbunden, von der sie Verknüpfungsinformationen zu dem jeweiligen Behälter mit der von der Identifikationseinrichtung 4 festgestellten Behälter-Identifikation und ggf. zu weiteren Behältern erhalten kann, vgl. Fig. 2. Der Greifer 9 wird durch die Steuerungseinrichtung 8 so angesteuert, dass er die Wertdokumente 1 eines ersten Deposits und Wertdokumente 2 eines zweiten Deposits aus dem Behälter 100 entnimmt und voneinander getrennt in das Eingabefach 61 der Wertdokumentbearbeitungsvorrichtung 60 einlegt. Dabei werden die Wertdokumente 1 des ersten Deposits (z.B. ID16) und Wertdokumente 2 des zweiten Deposits (z.B. ID17) auf zwei verschiedene Rechen 65, 66 der Zuführeinrichtung aufgelegt. Die Bewegung der Rechen 65, 66 wird von einer anderen Steuereinrichtung 18 gesteuert, die auch mit der Protokolleinrichtung 3 verbunden sein kann, vgl. Fig. 2.

Die Steuereinrichtung 18 steuert die Wertdokumentzuführeinrichtung 65, 66 so, dass die Wertdokumente des ersten und zweiten Deposits voneinander getrennt der Vereinzelungseinrichtung 63 der Wertdokumentbearbeitungsvorrichtung zugeführt werden. Die Wertdokumentzuführeinrichtung wird vorzugsweise so gesteuert, dass zwischen dem Vereinzeln des letzten Wertdokuments des ersten Deposits und dem Vereinzeln des ersten Wertdokuments des zweiten Deposits eine Pause eingelegt wird, in der kein Wertdokument der Vereinzelungseinrichtung zugeführt wird. So wird eine sichere Trennung der beiden Deposits erreicht. Die Pause ist vorzugsweise mindestens 5 mal so lang wie der zeitliche Abstand zwischen dem Vereinzeln zweier unmittelbar aufeinander folgender Wertdokumente desselben Deposits.

Alternativ zu einem Eingabemodul 10 kann auch einen Roboter vorgesehen sein, der einen Greifer 9 aufweist, um die Wertdokumente automatisch aus Behältern 100 zu entnehmen und in das Eingabefach 61 der Vorrichtung 60 einzulegen (nicht gezeigt). Der Roboter kann eigenständig sein oder ein Teil der Vorrichtung 60 sein. Die mit Wertdokumenten beladenen Behälter 100 können mittels einer Transportvorrichtung zur Vorrichtung 60 in den Erfassungsbereich des Robotergreifers transportiert werden und die leeren Behälter nach der Wertdokumententnahme wieder von dem Roboter wegtransportiert werden und ggf. zu einem Vorbereitungsplatz transportiert werden.

In Fig. 1d ist ein Vorbereitungsplatz gezeigt, an dem eine Bedienperson 50 Wertdokumente 1 eines Deposits aus einem Anlieferungsbehälter 16 entnommen hat, um diese in einen Behälter 100 einzulegen. Die Bedienperson 50 liest mit Hilfe einer Erfassungseinrichtung 6 (z.B. Barcodescanner) die Deposit-Identifikation ID16 des Anlieferungsbehälters 16 und die Behälter-Identifikation B1 des Behälters 100 ein, vgl. Fig. 1. Für den Behälter mit der Behälter-Identifikation B1 kann die Protokolleinrichtung 3 (anhand von in ihrer Software für diesen Behälter hinterlegten Informationen) feststellen, dass dieser 4 Aufbewahrungsbereiche aufweist und die Lage des jeweiligen Aufbewahrungsbereichs entlang des Behälters. Neben dem Einlegen können am Vorbereitungsplatz auch weitere Schritte unternommen werden, um die Wertdokumente für ihre maschinelle Bearbeitung vorzubereiten.

Die Erfassungseinrichtung 6 ist (z.B. drahtlos) mit der Protokolleinrichtung 3 verbunden und teilt dieser die jeweils eingelesene Deposit-Identifikation und die Behälter-Identifikation B1 mit. Die Wertdokumente des Deposits ID16 kann die Bedienperson in einen beliebigen der vier Aufbewahrungsbereiche des Behälters 100 einlegen. Das Einlegen der Wertdokumente des Deposits in den Behälter 100 wird mittels einer Überwachungseinrichtung 15 überwacht, die mit der Protokolleinrichtung 3 verbunden ist. Die Überwachungseinrichtung 15 weist in diesem Beispiel einen Lichtschrankenvorhang mit acht Lichtschranken auf. Im gezeigten Beispiel sind für jeden Aufbewahrungsbereich zwei Lichtschranken vorgesehen. Es kann aber auch eine einzige Lichtschranke pro Aufbewahrungsbereich ausreichen. Der Behälter 100 ist in einer schräggestellten Behälteraufnahme eingelegt, die an der den Lichtschranken gegenüberliegenden Seite eine lichtreflektierende Platte aufweist. Durch die Schrägstellung rutschen die eingelegten Wertdokumente aufgrund ihrer Schwerkraft nach unten, so dass sie entlang der unteren Seitenkante ausgerichtet werden. An der Behälteraufnahme ist eine Erfassungseinrichtung 14 zum Erfassen der Behälter-Identifikation des Behälters 100 angebracht. Alternativ kann die Behälter-Identifikation auch mittels des Barcodescanner 6 erfasst werden.

Beim manuellen Einlegen der Wertdokumente in den Behälter 100 werden die jeweiligen Lichtschranken unterbrochen und die Überwachungseinrichtung 15 übermittelt an die Protokolleinrichtung 3, welche der Lichtschranken unterbrochen wurde/n. Unter Berücksichtigung der Lage der Aufbewahrungsbereiche entlang des Behälters kann die Protokolleinrichtung 3 damit feststellen, in welchen der Aufbewahrungsbereiche des Behälter die jeweiligen Wertdokumente eingelegt wurden. Die Protokolleinrichtung 3 verknüpft dann die zuvor eingelesene Deposit-Identifikation ID16 mit der Aufbewahrungsbereich-Identifikation AB1 desjenigen Aufbewahrungsbereichs, für den die Überwachungseinrichtung 15 das Einlegen der Wertdokumente registriert hat und mit der Behälter-Identifikation B1. Diese Verknüpfungsinformationen übermittelt die Protokolleinrichtung 3 an die Steuereinrichtung 18 und/oder an die Abrechnungseinrichtung 19, die die übermittelten Verknüpfungsinformationen V abspeichert und später dazu verwendet, die aus den aus dem jeweiligen Aufbewahrungsbereich des jeweiligen Behälters entnommenen Wertdokumente dem jeweiligen Deposit zuzuordnen.

An Stelle eines Lichtschrankenvorhangs kann die Überwachungseinrichtung auch einen Abstandssensor 25 aufweisen, vgl. Fig. 1a, der den Abstand eines in seinen Erfassungsbereich eingetreten Objekts, z.B. die Hand der Bedienperson oder den Wertdokumentstapel, bestimmen kann. Anhand des Abstands kann die Protokolleinrichtung der jeweilige Aufbewahrungsbereich bestimmen, in den die jeweiligen Wertdokumente eingelegt werden.

Im oberen Teil der Fig. 2 ist ein Vorbereitungsplatz gezeigt, an dem ein Behälter 100 von einer Bedienperson 50 mit Wertdokumenten befüllt wird. Zu Beginn liest die Bedienperson 50 die Behälter-Identifikation B1 des Behälters 100 mit Hilfe einer Erfassungseinrichtung 6 (z.B. Barcodescanner) ein, welche die Behälter-Identifikation B1 an eine Protokolleinrichtung 3 übermittelt. Falls an dem Vorbereitungsplatz Behälter unterschiedlicher Art zum Einsatz kommen, kann die Protokolleinrichtung 3 anhand der Behälter-Identifikation die Lagen der für diesen Behälter definierten Aufbewahrungsbereiche feststellen. Die Wertdokumente zweier verschiedener Deposits werden in Anlieferungsbehältern 16,17 zum Vorbereitungsplatz gebracht, in welche die Wertdokumente vom jeweiligen Einzahler eingelegt wurden. Als Anlieferungsbehälter sind in Fig. 2 zwei Safebags 16,17 (Einwegbehälter für Wertdokumente) gezeigt, in welchen die Wertdokumenten zweier verschiedener Deposits enthalten sind. Die Bedienperson 50 nimmt zuerst den Safebag 16 zur Hand und liest dessen Deposit-Identifikation ID16 mit Hilfe derselben Erfassungseinrichtung 6. Dann öffnet sie den Safebag 16, entnimmt die darin befindlichen Wertdokumente des ersten Deposits und legt diese den ersten Aufbewahrungsbereich AB1 des Behälters 100. Anschließend nimmt die Bedienperson 50 den Safebag 17 zur Hand, liest dessen Deposit-Identifikation ID17 mit Hilfe der Erfassungseinrichtung 6, öffnet den Safebag 17. Die darin befindlichen Wertdokumente des zweiten Deposits werden in diesem Beispiel in den zweiten Aufbewahrungsbereich AB2 und in den dritten Aufbewahrungsbereich des Behälters 100 eingelegt. Wertdokumente eines weiteren Deposits ID18, dessen Anlieferungsbehälter nicht gezeigt ist, werden in den vierten Aufbewahrungsbereich AB4 des Behälters 100 eingelegt. Alternativ können auch andere Anlieferungsbehälter verwendet werden, z.B. Wertdokumentkassetten mit eindeutiger Identifikation, die als Deposit-Identifikation verwendet wird.

Das Einlegen der Wertdokumente des ersten und zweiten Deposits in den Behälter 100 wird mittels einer Überwachungseinrichtung 5 überwacht, die in diesem Beispiel eine (Foto- oder Video-) Kamera aufweist. Die Überwachungseinrichtung 5 kann zusätzlich auch dazu eingerichtet sein, die Behälter-Identifikation des Behälters 100 und/oder die Deposit-Identifikation ID16, ID17 der Anlieferungsbehälter 16,17 zu erfassen, die zu diesem Zweck von der Bedienperson ggf. in Richtung Kamera 5 gehalten werden. Dann kann auf die Erfassungseinrichtung 6 verzichtet werden.

Die Kamera 5 ist von schräg oben auf den Behälter 100 und den Bereich darüber gerichtet und erfasst Bilder zu verschiedenen Zeitpunkten der Wertdokumentvorbereitung, z.B. jeweils vor und nach dem Einlegen von Wertdokumenten in den Behälter 100 durch die Bedienperson 50. Zum Beispiel wird durch die Erfassung der Deposit-Identifikation ID1 des ersten Anlieferungsbehälters mittels der Erfassungseinrichtung 6 ausgelöst, dass die Kamera 5 in bestimmten ein erstes Bild des Behälters 100 aufnimmt und in zeitlichen Abständen davon jeweils ein weiteres Bild des Behälters 100 aufnimmt, um jeweils vor und nach dem Einlegen der Wertdokumente in den Behälter ein Bild davon aufzunehmen. Die von der Kamera 5 aufgenommenen Bilder werden einer Differenzbildanalyse unterzogen, bei der jeweils der Unterschied der weiteren Bilder zu dem ersten Bild ermittelt wird. Es kann aber auch immer der Unterschied zweier aufeinander folgend aufgenommener Bilder ermittelt werden. Anhand des jeweiligen Bildunterschieds wird festgestellt, in welchen der Aufnahmebereiche AB1, AB2, AB3 oder AB4 die Wertdokumente des jeweiligen Deposits eingelegt wurden. Falls am Vorbereitungsplatz Behälter mit unterschiedlichen Aufbewahrungsbereichen verwendet werden, wird bei der Bestimmung, in welchen Aufbewahrungsbereich gerade Wertdokumente eingelegt werden, die Lage der Aufbewahrungsbereiche des jeweiligen Behälters 100 berücksichtigt.

Die Steuerung der Bildaufnahme der Kamera 5 und der Differenzbildvergleich werden durch eine Steuer- und Auswerteeinrichtung 13 durchgeführt, die mit der Kamera 5 und mit der Protokolleinrichtung 3 verbunden ist. Wird bei dem Differenzbildvergleich in dem Bildausschnitt eines Aufbewahrungsbereichs AB1, AB2, AB3 und/oder AB4 des Behälters 100 ein Unterschied festgestellt, der darauf hindeutet, dass Wertdokumente in einen der Aufbewahrungsbereiche des Behälters 100 eingelegt wurden, so ermittelt die Steuer- und Auswerteeinrichtung 13 die dem jeweiligen Aufbewahrungsbereich zugeordnete Aufbewahrungsbereich-Identifikation und übermittelt diese an die Protokolleinrichtung 3. Die Protokolleinrichtung 3 verknüpft die von der Steuer- und Auswerteeinrichtung 13 ermittelte Aufbewahrungsbereich-Identifikation mit der zuvor von der Erfassungseinrichtung 6 erfassten Deposit-Identifikation und mit der zuvor erfassten Behälter-Identifikation B1 des Behälters 100. Im vorliegenden Beispiel wird aufgrund dieses Bildvergleichs die Deposit-Identifikation ID16 des ersten Deposits mit der Aufbewahrungsbereich-Identifikation AB1 des ersten Aufbewahrungsbereichs und mit der Behälter-Identifikation B1 verknüpft. Und die Deposit-Identifikation ID17 des zweiten Deposits wird mit den Aufbewahrungsbereich-Identifikationen AB2 und AB3 des zweiten und dritten Aufbewahrungsbereichs und mit der Behälter-Identifikation B1 verknüpft. Und die Deposit-Identifikation ID18 des d Deposits wird mit den Aufbewahrungsbereich-Identifikationen AB4 des vierten Aufbewahrungsbereichs und mit der Behälter-Identifikation B1 verknüpft. Ein Beispiel für die von der Protokolleinrichtung erzeugten Verknüpfungsinformationen V ist in Fig. 2 rechts dargestellt.

Neben der Verknüpfungsinformationen V für den Behälter 100 mit der Behälter-Identifikation B1 sind darin beispielhaft auch die Verknüpfungsinformationen V für einen weiteren Behälter mit der Behälter-Identifikation B2 enthalten. Für den (nicht gezeigten) weiteren Behälter mit der Behälter-Identifikation B2 konnte die Protokolleinrichtung (anhand von in der Software hinterlegten Informationen) feststellen, dass dieser fünf Aufbewahrungsbereiche aufweist und die Lage des jeweiligen Aufbewahrungsbereichs entlang des Behälters. Für den Behälter mit der Behälter-Identifikation B2 wurde mittels des Differenzbildvergleichs festgestellt, dass das Deposit ID30 in den Aufbewahrungsbereichen AB1 und AB2 eingelegt wurde, und das Deposit ID5 in den Aufbewahrungsbereich AB3, AB4 und AB5. Die Protokolleinrichtung 3 erzeugt daraus für B2 die in Fig. 2 gezeigten Verknüpfungsinformationen und übermittelt sie an die Steuereinrichtung 8 bzw. 18 und/oder an die Abrechnungseinrichtung 19, die die übermittelten Verknüpfungsinformationen V abspeichert.

Die Steuereinrichtung 8 bzw. 18 und/oder die Abrechnungseinrichtung 19 weist eine Software auf, die auf Basis der Behälter-Identifikation, die ihr von der Identifikationseinrichtung übermittelt wurde, für den jeweiligen Behälter mit der jeweiligen Behälter-Identifikation die zu dem jeweiligen Behälter gehörigen Verknüpfungsinformationen V heraussucht und anhand der Verknüpfungsinformationen V für jeden Aufbewahrungsbereich des jeweiligen Behälters feststellt, mit jeweils welcher Deposit-Identifikation die einzelnen Aufbewahrungsbereich-Identifikationen des jeweiligen Behälters verknüpft sind. So ordnet die Steuereinrichtung 8 bzw. 18 und/oder die Abrechnungseinrichtung 19 die in dem jeweiligen Aufbewahrungsbereich des jeweiligen Behälters vorhandenen Wertdokumente jeweils dem jeweiligen Deposit zu.

Die Anordnung kann auch eine Transporteinrichtung aufweisen, mit welcher der Behälter, in dem die Wertdokumente des ersten Deposits und des zweiten Deposits in verschiedenen Aufbewahrungsbereichen enthalten sind, und ggf. weitere Behälter, von dem Vorbereitungsplatz 70 (über einen Transportweg 80) zu einem Eingabemodul 10 der Wertdokumentbearbeitungsvorrichtung 60 transportiert werden kann. Alternativ kann der jeweilige Behälter auch direkt zu der Wertdokumentbearbeitungsvorrichtung 60 transportiert werden (ohne Eingabemodul).

An der Wertdokumentbearbeitungsvorrichtung werden die Wertdokumente aus dem Behälter 100 entnommen und der Wertdokumentbearbeitungsvorrichtung 60 zugeführt. In einem Ausführungsbeispiel werden die Wertdokumente der verschiedenen Aufbewahrungsbereiche, ohne Berücksichtigung ihrer Depositzugehörigkeit, getrennt der Vereinzelungseinrichtung 63 zugeführt, d.h. ohne Zusammenführen der Wertdokumente desselben Deposits, die aus verschiedenen Aufbewahrungsbereichen entnommen wurden. Und die Wertdokumentbearbeitungsvorrichtung 60 ermittelt dann bei der Prüfung der Wertdokumente für jeden Aufbewahrungsbereich individuell jeweils den Wert W der daraus entnommenen Wertdokumente und übermittelt diese Werte W an die Abrechnungseinrichtung 19, vgl. Fig. 1d. Aus den Verknüpfungsinformationen V leitet die Abrechnungseinrichtung 19 ab, welche Aufbewahrungsbereiche zum selben Deposit gehören und summiert für jedes Deposit die von der Wertdokumentbearbeitungsvorrichtung ermittelten individuellen Werte W all jener Aufbewahrungsbereiche, die Wertdokumente des jeweiligen Deposits enthielten. So kann die Abrechnungseinrichtung 19, anhand der Zählergebnisse der Wertdokumentbearbeitungsvorrichtung 60 und anhand der Verknüpfungsinformationen, jeweils eine Abrechnung der Wertdokumente des jeweiligen Deposits durchführen.

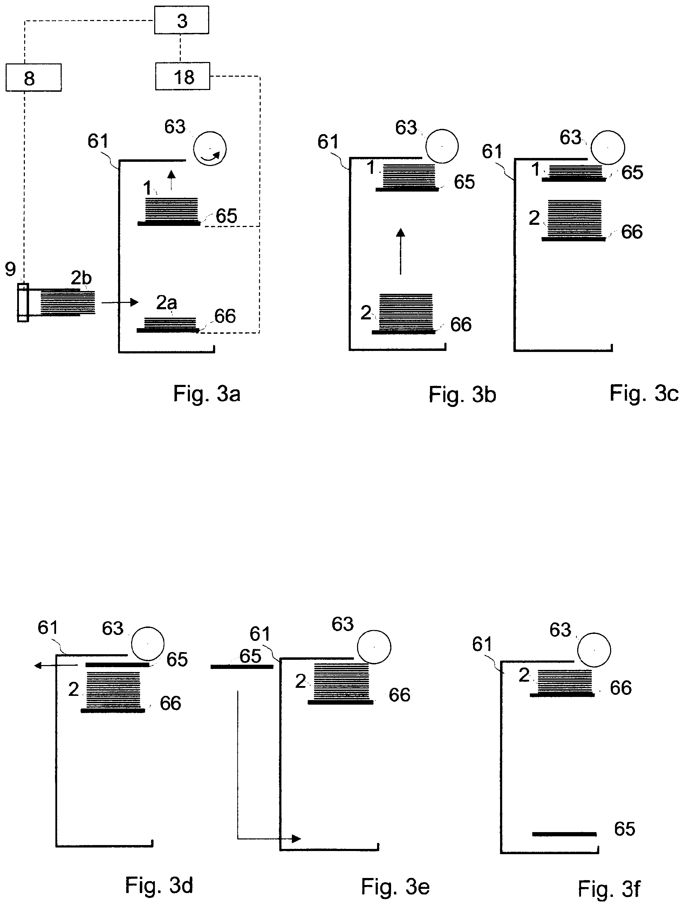

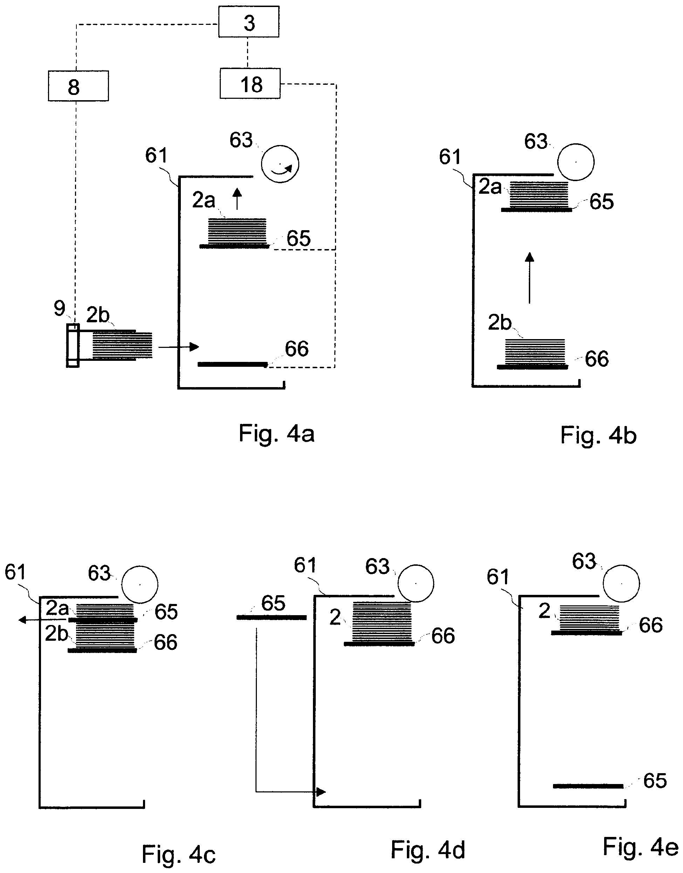

In Fig. 3a-f ist ein erstes bevorzugtes Ausführungsbeispiel für den Ablauf der Zuführung der Wertdokumente gezeigt, in Fig. 4a-e ein zweites bevorzugtes Ausführungsbeispiel. Zur Vereinfachung der Darstellungen in Fig. 3b-f und Fig. 4b-e sind die Steuereinrichtungen 8,18 und deren Verbindung zur Protokolleinrichtung 3 nur in den Fig. 3a, 4a gezeigt. Im oberen Teil des Eingabefachs 61 befindet sich eine Vereinzelungseinrichtung 63, durch die Wertdokumente einzeln nacheinander vom jeweiligen Wertdokumentstapel abgezogen werden, um diese durch die Wertdokumentbearbeitungsvorrichtung 60 zu prüfen, zu zählen und ggf. zu sortieren.

Im Ausführungsbeispiel der Fig. 3a-f wird der Greifer 9 durch die Steuereinrichtung 8 des Eingabemoduls 10 derart gesteuert, dass er das Auflegen der Wertdokumente auf die zwei Rechen 65, 66 in Abhängigkeit der Verknüpfungsinformationen V durchführt. Die aus dem ersten Aufbewahrungsbereich AB1 des Behälters 100 entnommenen Wertdokumente 1 des ersten Deposits ID16 werden auf den oberen Rechen 65 aufgelegt. Aus dem zweiten Aufbewahrungsbereich AB2 des Behälters 100 wird eine erste Teilmenge von Wertdokumenten 2a des zweiten Deposits ID17 entnommen und auf den unteren Rechen 66 aufgelegt. Aus dem dritten Aufbewahrungsbereich AB3 des Behälters 100 entnimmt der Greifer 9 eine zweite Teilmenge 2b von Wertdokumenten des zweiten Deposits ID17 und legt diese auf die erste Teilmenge von Wertdokumenten 2a des zweiten Deposits ID17, die bereits auf dem unteren Rechen 66 liegt, vgl. Fig. 3a. Beim Auflegen auf den unteren Rechen 66 werden die aus verschiedenen Aufbewahrungsbereichen des Behälters 100 entnommenen Wertdokumentstapel 2a, 2b miteinander zusammengeführt und zu einem einzigen Wertdokumentstapel 2 vereinigt, vgl. Fig. 3b. Während des Einlegens der Wertdokumente 2a, 2b können die Wertdokumente 1 des ersten Deposits ID16 bereits mittels der Vereinzelungseinrichtung 63 vereinzelt werden. Nach seiner Vereinigung wird der Wertdokumentstapel 2 mit Hilfe des Rechens 66 nach oben zur Vereinzelungseinrichtung 63 transportiert, vgl. Fig. 3c. Aufgrund der ihr übermittelten Verknüpfungsinformationen V weiß die Steuereinrichtung 18 der Zuführeinrichtung, dass sie mit dem nach oben Transportieren des unteren Rechens 66 warten muss bis das Einlegen der Teilstapel 2a, 2b des zweiten Deposits ID17 auf dem unteren Rechen 66 abgeschlossen ist. Die Steuereinrichtung 18 sorgt außerdem dafür, dass mit der Zuführung des zweiten Wertdokumentstapels 2 zur Vereinzelungseinrichtung 63 gewartet wird bis das letzte Wertdokument des ersten Wertdokumentstapels 1 von dem oberen Rechen 65 abgezogen wurde und der obere Rechen 65 von der Vereinzelungseinrichtung 63 entfernt wurde, vgl. Fig. 3d. Dieser wird dann wieder in den unteren Bereich des Eingabefachs 61 transportiert (vgl. Fig. 3e), wo er wieder zum Einlegen des weiteren Wertdokumentstapels des weiteren Deposits ID18 zur Verfügung steht, vgl. Fig. 3f.

Die zu verschiedenen Deposits gehörenden Wertdokumente werden nicht zusammengeführt, sondern getrennt voneinander eingelegt.. So wurden die Wertdokumente 1 des ersten Deposits ID16 auf den oberen Rechen 65 aufgelegt und die Wertdokumente 2 des zweiten Deposits ID17 auf den unteren Rechen 66. Dadurch entsteht beim Vereinzeln der Wertdokumente mittels der Vereinzelungseinrichtung 63 eine zeitliche Lücke zwischen den beiden Deposits, d.h. zwischen dem Abziehen des letzten Wertdokuments des Deposits ID16 und dem Abziehen des ersten Wertdokuments des zweiten Deposits ID17. Aufgrund dieser zeitlichen Lücke kann die Wertdokumentbearbeitungsvorrichtung 60 die beiden Deposits sicher voneinander trennen.

Im Ausführungsbeispiel der Fig. 4a-e werden die aus verschiedenen Aufbewahrungsbereichen des Behälters 100 entnommenen Wertdokumentstapel 2a, 2b des zweiten Deposits ID17 nicht beim Auflegen auf den unteren Rechen 66 durch den Greifer 9 miteinander zusammengeführt und zu einem einzigen Wertdokumentstapel 2 vereinigt. Sondern die Wertdokumentstapel 2a, 2b des zweiten Deposits ID17 werden erst später, nachdem sie getrennt voneinander eingelegt wurden, mit Hilfe der beiden Rechen 65, 66 miteinander zusammengeführt und zu einem einzigen Wertdokumentstapel 2 vereinigt. In Fig. 4a hat der Greifer 9 den ersten Teilstapel an Wertdokumenten 2a des zweiten Deposits ID17, den er aus dem Aufbewahrungsbereich AB2 entnommen hat, auf den oberen Rechen 65 aufgelegt und ist gerade dabei, den zweiten Teilstapel an Wertdokumenten 2b des zweiten Deposits ID17, den er aus dem Aufbewahrungsbereich AB3 entnommen hat, auf den unteren Rechen 66 aufzulegen (Fig. 4b). In Fig. 4c ist der untere Rechen 66 mit dem Teilstapel 2b an die Unterseite des oberen Rechens 65 herangefahren. Der obere Rechen 65 wird anschließend herausgezogen, so dass der Teilstapel 2a des oberen Rechnens 65 auf den Teilstapel 2b des unteren Rechens 66 abgelegt wird und die beiden Teilstapel 2a, 2b des zweiten Deposits ID17 zu einem einzigen Stapel 2 vereinigt werden, vgl. Fig. 4d. Das Vereinigen der beiden Teilstapel 2a, 2b kann durchgeführt werden bevor oder gleichzeitig während Wertdokumente von der Oberseite des Teilstapels 2a durch die Vereinzelungseinrichtung 63 vereinzelt werden. Damit beim Herausziehen des oberen Rechens 65 keine Wertdokumente seitlich mitgezogen werden, kann ein Rückhalteelement verwendet werden (nicht gezeigt) oder die Wertdokumente werden von der Seitenwand des Eingabefachs 61 zurückgehalten, die eine entsprechende Öffnung zum Hindurchtauchen des oberen Rechens 65 hat.

Der obere Rechen 65 wird dann wieder in den unteren Bereich des Eingabefachs 61 transportiert und steht dort wieder zum Einlegen der Wertdokumente des weiteren Deposits ID18 zur Verfügung, vgl. Fig. 4e.

Die Steuereinrichtung 18 der Zuführeinrichtung weist eine Software auf, die die beiden Rechen 65, 66 der Zuführeinrichtung so steuert, dass die Teilstapel 2a, 2b des zweiten Deposits ID17, die aus verschiedenen Aufbewahrungsbereichen des Behälters entnommen wurden, in der Zuführeinrichtung zu einem einzigen Wertdokumentstapel vereinigt werden. Die Steuereinrichtung 18 entscheidet, auf Basis der VerknüpfungsinformationenV, ob die auf den beiden Rechen 65, 66 aufgelegten Wertdokumente voneinander getrennt oder gemeinsam (d.h. als vereinigter Wertdokumentstapel) der Vereinzelungseinrichtung zugeführt werden. Die beiden auf die beiden Rechen aufgelegten Wertdokumentstapel werden dabei nur zusammengeführt und zu einem einzigen Wertdokumentstapel vereinigt, falls sie zum selben Deposit gehören. Aufgrund des Zusammenführens zu einem einzigen Wertdokumentstapel kann die Wertdokumentbearbeitungsvorrichtung 60 das zweite Deposit schneller bearbeiten.

Wertdokumentstapel, die zu verschiedenen Deposits gehören, werden nicht zusammengeführt und zu einem einzigen Wertdokumentstapel vereinigt. Sind auf den beiden Rechen 65, 66 Wertdokumentstapel verschiedener Deposits abgelegt, so wird beim Ablauf aus Fig. 4a-e das Herausziehen des oberen Rechens 65 einfach zu einem späteren Zeitpunkt durchgeführt, erst nachdem das letzte Wertdokument des auf dem oberen Rechen 65 befindlichen Wertdokumentstapels von der Vereinzelungseinrichtung 63 abgezogen worden ist. Dadurch entsteht beim Vereinzeln eine Pause zwischen den beiden Deposits, d.h. zwischen dem Abziehen des letzten Wertdokuments des oberen Rechens 65 und dem Abziehen des ersten Wertdokuments des unteren Rechens 66 (welches ja zu einem anderen Deposit gehört). Aufgrund dieser Pause kann die Wertdokumentbearbeitungsvorrichtung 60 die beiden Deposits sicher voneinander trennen.

In einem weiteren Ausführungsbeispiel (nicht gezeigt) weist die Zuführeinrichtung - an Stelle der beiden Rechen 65, 66 - nur eine einzige Aufnahme (z.B. Rechen, Platte, Hubboden) zur Aufnahme der mit dem Greifer 9 eingelegten Wertdokumentstapel auf. Auch dann ist ein Zusammenführen der Teilstapel 2a, 2b desselben Deposits beim Ablegen auf die Aufnahme möglich, wie es in Fig. 3a,b beim Ablegen der Wertdokumentstapel 2a,b auf den Rechen 66 gezeigt ist. Bei diesem Ausführungsbeispiel ist der Aufbau der Zuführeinrichtung einfacher. Jedoch muss das Einlegen der Wertdokumente und Zuführen des eingelegten Wertdokumentstapels zur Vereinzelungseinrichtung 63 abgewartet werden, bevor mit dem Vereinzeln begonnen werden kann. Dann können nicht, gleichzeitig mit dem Vereinzeln eines ersten Deposits, bereits Wertdokumente eines zweiten Deposits eingelegt werden.

Alternativ zu den gezeigten Ausführungsbeispiel - kann an Stelle des stapelobersten Wertdokuments vom jeweiligen Wertdokumentstapel abzuziehen (wie in Fig. 3a-f und 4a-e) - eine am unteren Ende des Eingabefachs 61 positionierte Vereinzelungseinrichtung verwendet werden, die jeweils das stapelunterste Wertdokument eines ins Eingabefach 61 eingelegten Wertdokumentstapels abzieht. Das Zusammenführen der Teilstapel 2a, 2b desselben Deposits zu einem vereinigten Teilstapel 2 wird dann an der Oberseite des zuerst eingelegten Teilstapels 2a durchgeführt, der zuerst vereinzelt wird. Auch hier kann das Zusammenführen der beiden Teilstapel desselben Deposits bereits beim Einlegen (analog zu Fig. 3a, 3b) erfolgen oder erst nach dem Einlegen der beiden Teilstapel (analog zu Fig. 4c, 4d), durch Herausziehen eines zwischen den beiden Teilstapeln 2a, 2b befindlichen Rechens.

## Patentansprüche

1. Anordnung zur Bearbeitung von Wertdokumenten (1), die vor ihrer Bearbeitung mittels einer Wertdokumentbearbeitungsvorrichtung (60) an einem Vorbereitungsplatz (70) in einen Wertdokumentbehälter eingelegt werden, der in mehrere Aufbewahrungsbereiche für Wertdokumente unterteilt ist, wobei jedem der Aufbewahrungsbereiche eine Aufbewahrungsbereich-Identifikation zugeordnet ist, wobei die Anordnung aufweist:
- eine Überwachungseinrichtung (5, 15, 25), die an dem Vorbereitungsplatz vorhanden ist und dazu eingerichtet ist, automatisch zu erfassen, in welchen oder in welche erste Aufbewahrungsbereiche des Wertdokumentbehälters die Wertdokumente eines ersten Deposits, die aus einem ersten Anlieferungsbehälter entnommen wurden, eingelegt werden, und in welchen oder in welche zweiten Aufbewahrungsbereiche des Wertdokumentbehälters die Wertdokumente eines zweiten Deposits, die aus einem zweiten Anlieferungsbehälter entnommen wurden, eingelegt werden,
- ggf. eine erste Erfassungseinrichtung (6) und ggf. eine zweite Erfassungseinrichtung (14), die an dem Vorbereitungsplatz vorhanden sind,
wobei die Überwachungseinrichtung (5) oder die erste Erfassungseinrichtung (6) dazu eingerichtet ist, eine erste Deposit-Identifikation (ID16) des ersten Deposits und eine zweiten Deposit-Identifikation (ID17) des zweiten Deposits zu erfassen, deren Wertdokumente in den Wertdokumentbehälter eingelegt werden sollen, und
wobei die Überwachungseinrichtung (5) oder die erste Erfassungseinrichtung (6) oder die zweite Erfassungseinrichtung (14) dazu eingerichtet ist, eine Behälter-Identifikation (B1, B2) des am Vorbereitungsplatz angeordneten Wertdokumentbehälters (100) zu erfassen, und
wobei die Anordnung außerdem aufweist:
- eine Protokolleinrichtung (3), die mit der Überwachungseinrichtung (5) und ggf. mit der ersten Erfassungseinrichtung (6) und ggf. mit der zweiten Erfassungseinrichtung (7) verbunden ist, und
- eine mit der Protokolleinrichtung (3) verbundene Steuereinrichtung (8,18) und/oder eine mit der Protokolleinrichtung (3) verbundene Abrechnungseinrichtung (19),
wobei die Protokolleinrichtung (3) dazu eingerichtet ist, Verknüpfungsinformationen (V) zu erstellen und an die Steuereinrichtung (8,18) und/oder an die Abrechnungseinrichtung (19) zu übermitteln, aus denen hervorgeht, mit welcher mindestens einen Aufbewahrungsbereich-Identifikation (AB1, AB2,...) und mit welcher Behälter-Identifikation (B1, B2) die erste Deposit-Identifikation (ID16) verknüpft ist und mit welcher mindestens einen Aufbewahrungsbereich-Identifikation (AB1, AB2,...) und mit welcher Behälter-Identifikation die zweite Deposit-Identifikation (ID17) verknüpft ist, und
wobei die Steuereinrichtung (8,18) und/oder die Abrechnungseinrichtung (19) dazu eingerichtet ist, die in dem jeweiligen Aufbewahrungsbereich (AB1, AB2,...) des jeweiligen Wertdokumentbehälters vorhandenen Wertdokumente mit Hilfe der von der Protokolleinrichtung (3) übermittelten Verknüpfungsinformationen (V) jeweils dem ersten oder dem zweiten Deposit zuzuordnen.

2. Anordnung nach Anspruch 1, **gekennzeichnet durch**
- eine Identifikationseinrichtung (4), die an der Wertdokumentbearbeitungsvorrichtung (60) oder an einem Eingabemodul (10) der Wertdokumentbearbeitungsvorrichtung vorhanden ist und dazu eingerichtet ist, die Behälter-Identifikation (B1, B2) des Wertdokumentbehälters (100) zu erfassen und an die Steuereinrichtung (8,18) zu übermitteln, und
- eine Entnahmeeinrichtung (9), die an der Wertdokumentbearbeitungsvorrichtung (60) oder an oder in dem Eingabemodul (10) der Wertdokumentbearbeitungsvorrichtung vorhanden ist und die zur Entnahme der Wertdokumente aus dem Wertdokumentbehälter (100) und zum Eingeben der aus dem Wertdokumentbehälter entnommenen Wertdokumente in die Wertdokumentbearbeitungsvorrichtung (60) eingerichtet ist.

3. Anordnung nach Anspruch 2, **dadurch gekennzeichnet, dass** die Abrechnungseinrichtung (19) dazu eingerichtet ist, anhand von Zählergebnissen der Wertdokumentbearbeitungsvorrichtung (60) für die aus dem jeweiligen Aufbewahrungsbereich entnommenen Wertdokumente und anhand der aus den Verknüpfungsinformationen (V) abgeleiteten Zuordnung dieser Wertdokumente zum jeweiligen Deposit, eine Abrechnung der Wertdokumente des jeweiligen Deposits durchzuführen.

4. Anordnung nach einem der vorhergehenden Ansprüche, **dadurch gekennzeichnet, dass** die Steuereinrichtung (8,18) dazu eingerichtet ist, das Eingeben der Wertdokumente des ersten und zweiten Deposits in die Wertdokumentbearbeitungsvorrichtung (60) und/oder das Zuführen der in die Wertdokumentbearbeitungsvorrichtung eingegebenen Wertdokumente des ersten und zweiten Deposits zu der Vereinzelungseinrichtung (63) der Wertdokumentbearbeitungsvorrichtung in Abhängigkeit der Verknüpfungsinformationen (V) zu steuern, insbesondere derart zu steuern, dass die Wertdokumente desselben Deposits, die aus verschiedenen Aufbewahrungsbereichen des Wertdokumentbehälters entnommen wurden, beim Eingeben oder beim Zuführen miteinander zusammengeführt werden, aber die Wertdokumente des ersten Deposits beim Eingeben und Zuführen nicht mit den Wertdokumenten des zweiten Deposits zusammengeführt werden.

5. Anordnung nach einem der vorhergehenden Ansprüche, **dadurch gekennzeichnet, dass** die Steuereinrichtung (8,18) dazu eingerichtet ist, eine Zuführeinrichtung (65, 66) der Wertdokumentbearbeitungsvorrichtung (60) dazu zu veranlassen, dass diese, beim Zuführen der Wertdokumente des ersten Deposits und des darauffolgend eingegebenen zweiten Deposits zu der Vereinzelungseinrichtung (63) der Wertdokumentbearbeitungsvorrichtung, die Wertdokumente des ersten Deposits und die Wertdokumente des zweiten Deposits voneinander getrennt lässt bis das letzte Wertdokument des ersten Deposits durch die Vereinzelungseinrichtung vereinzelt worden ist.

6. Anordnung nach Anspruch 2 bis 5, **dadurch gekennzeichnet, dass** die Steuereinrichtung (8,18) dazu eingerichtet ist, die Entnahmeeinrichtung (9) dazu zu veranlassen, dass diese die Wertdokumente des ersten Deposits und des zweiten Deposits aus dem Wertdokumentbehälter entnimmt und voneinander getrennt in ein Eingabefach (61) der Wertdokumentbearbeitungsvorrichtung (60) einlegt, insbesondere dass die Steuereinrichtung (8,18) dazu eingerichtet ist, die Entnahmeeinrichtung (9) so zu steuern dass diese die Wertdokumente des ersten Deposits und des zweiten Deposits auf zwei verschiedene Aufnahmen (65, 66) einer Zuführeinrichtung der Wertdokumentbearbeitungsvorrichtung (60) auflegt.

7. Anordnung nach einem der Ansprüche 2 bis 6, **dadurch gekennzeichnet, dass** die Steuereinrichtung (8) eine Steuereinrichtung der Entnahmeeinrichtung ist und dazu eingerichtet ist, für den Wertdokumentbehälter, dessen Behälter-Identifikation die Identifikationseinrichtung (4) erfasst hat, die Entnahmeeinrichtung (9) derart zu steuern, dass die Entnahmeeinrichtung (9) das Eingeben der Wertdokumente in die Wertdokumentbearbeitungsvorrichtung (60) in Abhängigkeit der Verknüpfungsinformationen (V) durchführt, wobei die Entnahmeeinrichtung (9) alle Wertdokumente des ersten Deposits, die sie ggf. aus verschiedenen Aufbewahrungsbereichen des Wertdokumentbehälters entnimmt, beim Eingeben in die Wertdokumentbearbeitungsvorrichtung miteinander zusammenführt und alle Wertdokumente des zweiten Deposits, die sie ggf. aus verschiedenen Aufbewahrungsbereichen des Wertdokumentbehälters entnimmt, bei Eingeben in die Wertdokumentbearbeitungsvorrichtung miteinander zusammenführt und zu einem einzigen Wertdokumentstapel vereinigt, aber getrennt von den Wertdokumenten des ersten Deposits in die Wertdokumentbearbeitungsvorrichtung eingibt.

8. Anordnung nach einem der Ansprüche 2 bis 7, **dadurch gekennzeichnet,**
- **dass** die Wertdokumentzuführeinrichtung der Wertdokumentbearbeitungsvorrichtung mindestens zwei Aufnahmen (65, 66) zur Zuführung von Wertdokumenten zu der Vereinzelungseinrichtung (63) aufweist, und
- **dass** die eine Entnahmeeinrichtung (9), zur Entnahme der Wertdokumente aus dem Wertdokumentbehälter und zum Auflegen der Wertdokumente auf die zwei Aufnahmen (65, 66) der Wertdokumentzuführeinrichtung der Wertdokumentbearbeitungsvorrichtung eingerichtet ist, und
- **dass** die Steuereinrichtung (8,18) der Entnahmeeinrichtung die Entnahmeeinrichtung (9) derart steuert, dass die Entnahmeeinrichtung das Auflegen der Wertdokumente auf die zwei Aufnahmen (65, 66) in Abhängigkeit der Verknüpfungsinformationen(V) durchführt, wobei alle Wertdokumente des ersten Deposits, die ggf. aus verschiedenen Aufbewahrungsbereichen des Wertdokumentbehälters entnommen werden, beim Auflegen auf die erste Aufnahme (65) miteinander zusammengeführt und zu einem einzigen Wertdokumentstapel vereinigt werden und alle Wertdokumente des zweiten Deposits, die ggf. aus verschiedenen Aufbewahrungsbereichen des Wertdokumentbehälters entnommen werden, beim Auflegen auf die zweite Aufnahme (66) miteinander zusammengeführt und zu einem einzigen Wertdokumentstapel vereinigt werden, und
- **dass** die Wertdokumentzuführeinrichtung dazu eingerichtet ist, die auf die beiden Aufnahmen (65, 66) aufgelegten Wertdokumente voneinander getrennt der Vereinzelungseinrichtung der Wertdokumentbearbeitungsvorrichtung zuzuführen.

9. Anordnung nach einem der Ansprüche 2 bis 6, **dadurch gekennzeichnet, dass** die Steuereinrichtung eine Steuereinrichtung (18) der Zuführeinrichtung der Wertdokumentbearbeitungsvorrichtung (60) ist, die dazu eingerichtet ist, die Zuführeinrichtung (65, 66) in Abhängigkeit der Verknüpfungsinformationen (V) so zu steuern, dass diejenigen Wertdokumente desselben Deposits, die aus verschiedenen Aufbewahrungsbereichen des Wertdokumentbehälters mit Hilfe der Entnahmeeinrichtung (9) entnommen und voneinander getrennt in die Wertdokumentbearbeitungsvorrichtung eingelegt wurden, mit Hilfe der Zuführeinrichtung (65, 66) miteinander zusammengeführt und zu einem einzigen Wertdokumentstapel vereinigt werden.

10. Anordnung nach Anspruch 9, **dadurch gekennzeichnet dass** die Zuführeinrichtung der Wertdokumentbearbeitungsvorrichtung mindestens zwei Aufnahmen (65, 66) zur Zuführung von Wertdokumenten zu der Vereinzelungseinrichtung aufweist und die Steuereinrichtung (18) der Zuführeinrichtung die Zuführeinrichtung derart steuert, dass Wertdokumente, die aus verschiedenen Aufbewahrungsbereichen des Wertdokumentbehälters entnommen wurden, durch die Zuführeinrichtung in Abhängigkeit der Verknüpfungsinformationen (V) zu einem einzigen Wertdokumentstapel vereinigt werden, falls diese Wertdokumente zum selben Deposit gehören und nicht zu einem einzigen Wertdokumentstapel vereinigt werden, falls diese Wertdokumente zu verschiedenen Deposits gehören.

11. Anordnung nach einem der vorhergehenden Ansprüche, **dadurch gekennzeichnet, dass** die Überwachungseinrichtung eine Kamera (5) aufweist und eine mit der Kamera (5) verbundene Steuer- und Auswerteeinrichtung (13), welche dazu eingerichtet ist,
- die Kamera (5) dazu zu veranlassen, vor und nach dem Einlegen der Wertdokumente des jeweiligen Deposits in den am Vorbereitungsplatz bereit gestellten Wertdokumentbehälter jeweils mindestens ein Bild des Wertdokumentbehälters (100) aufzunehmen, und
- für jedes eingelegte Deposit eine Differenzbildanalyse durchzuführen, bei der anhand von Unterschieden zwischen den vor und nach dem Einlegen der Wertdokumente aufgenommenen Bildern des Wertdokumentbehälters ermittelt wird, in welchen mindestens einen Aufbewahrungsbereich des am Vorbereitungsplatz bereit gestellten Wertdokumentbehälters die Wertdokumente des jeweiligen Deposits eingelegt wurden.

12. Anordnung nach einem der Ansprüche 1 bis 10, **dadurch gekennzeichnet, dass** die Überwachungseinrichtung einen Lichtschrankenvorhang aus einer Vielzahl von Lichtschranken (15) aufweist, in deren Erfassungsbereich eine Eingabeseite eines am Vorbereitungsplatz (70) bereit gestellten Wertdokumentbehälters (100) liegt, und die Überwachungseinrichtung dazu eingerichtet ist, anhand von Signalen der Lichtschranken (15) zu ermitteln, in welchen mindestens einen Aufbewahrungsbereich des am Vorbereitungsplatz bereit gestellten Wertdokumentbehälters die Wertdokumente des jeweiligen Deposits eingelegt wurden.

13. Anordnung nach einem der Ansprüche 1 bis 10, **dadurch gekennzeichnet, dass** die Überwachungseinrichtung mindestens einen Abstandssensor (25) aufweist, in dessen Erfassungsbereich eine Eingabeseite eines am Vorbereitungsplatz (70) bereit gestellten Wertdokumentbehälters (100) liegt und der derart an einem Behälterende des am Vorbereitungsplatz bereit gestellten Wertdokumentbehälters angeordnet ist, dass die Aufbewahrungsbereiche verschiedene Abstände von dem Abstandssensor haben, und der dazu eingerichtet ist, den Abstand eines in seinem Erfassungsbereich eingetretenen Objekts von dem Abstandssensor zu bestimmen und die Überwachungseinrichtung dazu eingerichtet ist, anhand des bestimmten Abstands zu ermitteln, in welchen Aufbewahrungsbereich des am Vorbereitungsplatz bereit gestellten Wertdokumentbehälters die Wertdokumente des jeweiligen Deposits eingelegt wurden.

14. Verfahren zur Bearbeitung von Wertdokumenten (1), insbesondere durch eine Anordnung gemäß einem der vorhergehenden Ansprüche, wobei an einem Vorbereitungsplatz ein Wertdokumentbehälter (100) bereit gestellt wird, der in mehrere Aufbewahrungsbereiche für Wertdokumente unterteilt ist, wobei jedem der Aufbewahrungsbereiche eine Aufbewahrungsbereich-Identifikation zugeordnet ist, wobei an dem Vorbereitungsplatz folgende Schritte durchgeführt werden:
- Erfassen einer Behälter-Identifikation (B1) des Wertdokumentbehälters (100) mit Hilfe einer Überwachungseinrichtung (5) oder mit Hilfe einer ersten Erfassungseinrichtung (6) oder mit Hilfe einer zweiten Erfassungseinrichtung (14),
- Erfassen einer ersten Deposit-Identifikation (ID16) eines ersten Deposits, dessen Wertdokumente in den Wertdokumentbehälter (100) eingelegt werden sollen, mit Hilfe der Überwachungseinrichtung (5) oder mit Hilfe der ersten Erfassungseinrichtung (6),
- Entnehmen der Wertdokumente des ersten Deposits aus einem Anlieferungsbehälter (16) des ersten Deposits und Einlegen der Wertdokumente des ersten Deposits in mindestens einen ersten Aufbewahrungsbereich (AB1) des Wertdokumentbehälters, wobei mit Hilfe der Überwachungseinrichtung (5, 15, 25) automatisch erfasst wird, in welche oder in welchen der Aufbewahrungsbereiche des Wertdokumentbehälters die Wertdokumente des ersten Deposits eingelegt werden, und
- Verknüpfen der ersten Deposit-Identifikation (ID16) mit der mindestens einen Aufbewahrungsbereich-Identifikation (AB1) des mindestens einen ersten Aufbewahrungsbereichs und mit der Behälter-Identifikation (B1) durch eine Protokolleinrichtung (3), die mit der Überwachungseinrichtung (5, 15, 25) und ggf. der ersten und ggf. der zweiten Erfassungseinrichtung verbunden ist,
- Erfassen einer zweiten Deposit-Identifikation eines zweiten Deposits, dessen Wertdokumente in den Wertdokumentbehälter eingelegt werden sollen mit Hilfe der Überwachungseinrichtung (5) oder mit Hilfe der ersten Erfassungseinrichtung (6),
- Entnehmen der Wertdokumente des zweiten Deposits aus einem Anlieferungsbehälter (17) des zweiten Deposits und Einlegen der Wertdokumente des zweiten Deposits in mindestens einen zweiten Aufbewahrungsbereich des Wertdokumentbehälters, wobei mit Hilfe der Überwachungseinrichtung (5, 15, 25) automatisch erfasst wird, in welche oder in welchen der Aufbewahrungsbereiche des Behälters die Wertdokumente des zweiten Deposits eingelegt werden,
- Verknüpfen der zweiten Deposit-Identifikation (ID17) mit der mindestens einen Aufbewahrungsbereich-Identifikation (AB2, AB3) des mindestens einen zweiten Aufbewahrungsbereichs und mit der Behälter-Identifikation (B1) durch die Protokolleinrichtung (3),
wobei zum weiteren Bearbeiten der Wertdokumente des ersten und zweiten Deposits,
- der Wertdokumentbehälter zu einer Wertdokumentbearbeitungsvorrichtung (60) transportiert wird,
- die Protokolleinrichtung (3) Verknüpfungsinformationen (V) an eine mit der Protokolleinrichtung (3) verbundene Steuereinrichtung (8,18) und/oder an eine mit der Protokolleinrichtung (3) verbundene Abrechnungseinrichtung (19) übermittelt, anhand derer die Steuereinrichtung (8, 18) und/oder die Abrechnungseinrichtung (19) ableiten kann, mit welcher mindestens einen Aufbewahrungsbereich-Identifikation und mit welcher Behälter-Identifikation die erste Deposit-Identifikation (ID16) verknüpft ist und mit welcher mindestens einen Aufbewahrungsbereich-Identifikation und welcher Behälter-Identifikation die zweite Deposit-Identifikation (ID17) verknüpft ist,
- die Steuereinrichtung (8, 18) und/oder die Abrechnungseinrichtung (19) die Verknüpfungsinformationen (V) dazu verwendet, die aus dem jeweiligen Aufbewahrungsbereich des Behälters entnommenen Wertdokumente mit Hilfe der Verknüpfungsinformationen (V) dem ersten Deposit oder dem zweiten Deposit zuzuordnen.

15. Verfahren nach Anspruch 14, **dadurch gekennzeichnet,**
- **dass** die mit der Protokolleinrichtung (3) verbundene Abrechnungseinrichtung (19) anhand von Zählergebnissen der Wertdokumentbearbeitungsvorrichtung (60) für die aus dem jeweiligen Aufbewahrungsbereich entnommenen Wertdokumente und anhand der aus den Verknüpfungsinformationen abgeleiteten Zuordnung dieser Wertdokumente zum jeweiligen Deposit, eine Abrechnung der Wertdokumente des jeweiligen Deposits durchführt, und/oder
- **dass** die mit der Protokolleinrichtung (3) verbundene Steuereinrichtung (8,18) das Eingeben der Wertdokumente des ersten und zweiten Deposits in die Wertdokumentbearbeitungsvorrichtung (60) und/oder das Zuführen der in die Wertdokumentbearbeitungsvorrichtung eingegebenen Wertdokumente des ersten und zweiten Deposits zu einer Vereinzelungseinrichtung (63) der Wertdokumentbearbeitungsvorrichtung in Abhängigkeit der Verknüpfungsinformationen (V) steuert.

## Claims

1. An arrangement for processing value documents (1) which, at a preparation station (70), prior to their processing by means of a value document processing apparatus (60) are inserted into a value document container which is subdivided into several storage regions for value documents, wherein each of the storage regions has assigned thereto a storage region identification, the arrangement including:
- a monitoring device (5, 15, 25) which is present at the preparation station and is adapted to automatically capture into which first storage region or into which first storage regions of the value document container the value documents of a first deposit, which were removed from a first delivery container, are inserted, and into which second storage region or into which second storage regions of the value document container the value documents of a second deposit, which were removed from a second delivery container, are inserted,
- where applicable, a first capture device (6) and, where applicable, a second capture device (14) which are present at the preparation station,
wherein the monitoring device (5) or the first capture device (6) is adapted to capture a first deposit identification (ID 16) of the first deposit and a second deposit identification (ID17) of the second deposit, whose value documents are to be inserted into the value document container, and
wherein the monitoring device (5) or the first capture device (6) or the second capture device (14) is adapted to capture a container identification (B1, B2) of the value document container (100) arranged at the preparation station, and
the arrangement further including:
- a protocol device (3) which is connected to the monitoring device (5) and, where applicable, to the first capture device (6) and, where applicable, to the second capture device (7), and
- a control device (8, 18) connected to the protocol device (3) and/or an accounting device (19) connected to the protocol device (3),
wherein the protocol device (3) is adapted to create linking information (V) and transmit it to the control device (8, 18) and/or to the accounting device (19), which indicates to which at least one storage region identification (AB1, AB2, ...) and to which container identification (B1, B2) the first deposit identification (ID 16) is linked and to which at least one storage region identification (AB1, AB2, ...) and to which container identification the second deposit identification (ID17) is linked, and
wherein the control device (8, 18) and/or the accounting device (19) is adapted to assign the value documents present in the respective storage region (AB1, AB2, ...) of the respective value document container to the first or the second deposit, respectively, with the aid of the linking information (V) transmitted by the protocol device (3).

2. The arrangement according to claim 1, **characterized by**
- an identification device (4) which is present at the value document processing apparatus (60) or at an input module (10) of the value document processing apparatus and is adapted to capture the container identification (B1, B2) of the value document container (100) and transmit it to the control device (8, 18), and
- a removal device (9) which is present at the value document processing apparatus (60) or at or in the input module (10) of the value document processing apparatus and which is adapted to remove the value documents from the value document container (100) and to input the value documents removed from the value document container into the value document processing apparatus (60).

3. The arrangement according to claim 2, **characterized in that** the accounting device (19) is adapted to carry out an accounting of the value documents of the respective deposit on the basis of counting results of the value document processing apparatus (60) for the value documents removed from the respective storage region and on the basis of the assignment of these value documents to the respective deposit derived from the linking information (V).

4. The arrangement according to any of the preceding claims, **characterized in that** the control device (8, 18) is adapted to control the input of the value documents of the first and second deposit into the value document processing apparatus (60) and/or the feed of the value documents of the first and second deposit inputted in the value document processing apparatus to the singling device (63) of the value document processing apparatus in dependence on the linking information (V), in particular to control this in such a way that the value documents of the same deposit, which were removed from different storage regions of the value document container, are brought together upon the input or upon the feed, but the value documents of the first deposit are not brought together with the value documents of the second deposit upon the input and feed.

5. The arrangement according to any of the preceding claims, **characterized in that** the control device (8, 18) is adapted to cause a feeding device (65, 66) of the value document processing apparatus (60), upon feeding the value documents of the first deposit and of the subsequently inputted second deposit to the singling device (63) of the value document processing apparatus, to keep the value documents of the first deposit and the value documents of the second deposit separated from each other until the last value document of the first deposit has been singled by the singling device.

6. The arrangement according to claim 2 to 5, **characterized in that** the control device (8, 18) is adapted to cause the removal device (9) to remove the value documents of the first deposit and of the second deposit from the value document container and to insert them separately from each other into an input pocket (61) of the value document processing apparatus (60), in particular **in that** the control device (8, 18) is adapted to control the removal device (9) such that it places the value documents of the first deposit and of the second deposit on two different receiving means (65, 66) of a feeding device of the value document processing apparatus (60).

7. The arrangement according to any of claims 2 to 6, **characterized in that** the control device (8) is a control device of the removal device and is adapted to control the removal device (9), for the value document container whose container identification has been captured by the identification device (4), in such a way that the removal device (9) carries out the input of the value documents into the value document processing apparatus (60) in dependence on the linking information (V), wherein the removal device (9) brings together all the value documents of the first deposit, which it removes, where applicable, from different storage regions of the value document container, upon the input into the value document processing apparatus, and brings together all the value documents of the second deposit, which it removes, where applicable, from different storage regions of the value document container, upon the input into the value document processing apparatus, and combines these into one single value document stack, but inputs them into the value document processing apparatus separately from the value documents of the first deposit.

8. The arrangement according to any of claims 2 to 7, **characterized in**
- **that** the value document feeding device of the value document processing apparatus includes at least two receiving means (65, 66) for feeding value documents to the singling device (63), and
- **that** the one removal device (9) is adapted for removing the value documents from the value document container and for placing the value documents on the two receiving means (65, 66) of the value document feeding device of the value document processing apparatus, and
- **that** the control device (8, 18) of the removal device controls the removal device (9) in such a way that the removal device carries out the placing of the value documents on the two receiving means (65, 66) in dependence on the linking information (V), wherein all the value documents of the first deposit, which are removed, where applicable, from different storage regions of the value document container, are brought together and combined into one single value document stack upon being placed on the first receiving means (65), and all the value documents of the second deposit, which are removed, where applicable, from different storage regions of the value document container, are brought together and combined into one single value document stack upon being placed on the second receiving means (66), and
- **that** the value document feeding device is adapted to feed the value documents placed on the two receiving means (65, 66) separately from each other to the singling device of the value document processing apparatus.

9. The arrangement according to any of claims 2 to 6, **characterized in that** the control device is a control device (18) of the feeding device of the value document processing apparatus (60), which is adapted to control the feeding device (65, 66) in dependence on the linking information (V) such that those value documents of the same deposit, which were removed from different storage regions of the value document container with the aid of the removal device (9) and inserted separately from each other in the value document processing apparatus, are brought together and combined into one single value document stack with the aid of the feeding device (65, 66).

10. The arrangement according to claim 9, **characterized in that** the feeding device of the value document processing apparatus includes at least two receiving means (65, 66) for feeding value documents to the singling device, and the control device (18) of the feeding device controls the feeding device in such a way that value documents, which were removed from different storage regions of the value document container, are combined into one single value document stack by the feeding device in dependence on the linking information (V), if these value documents belong to the same deposit, and are not combined into one single value document stack, if these value documents belong to different deposits.

11. The arrangement according to any of the preceding claims, **characterized in that** the monitoring device includes a camera (5) and a control and evaluation device (13) connected to the camera (5), which is adapted for,
- causing the camera (5) to take respectively at least one image of the value document container (100) before and after the insertion of the value documents of the respective deposit in the value document container provided at the preparation station, and
- carrying out a difference image analysis for each inserted deposit, in which it is established, on the basis of differences between the images of the value document container taken before and after the insertion of the value documents, in which at least one storage region of the value document container provided at the preparation station the value documents of the respective deposit were inserted.

12. The arrangement according to any of claims 1 to 10, **characterized in that** the monitoring device includes a light barrier curtain made of a plurality of light barriers (15), in the capture region of which an input side of a value document container (100) provided at the preparation station (70) is located, and the monitoring device is adapted to establish, on the basis of signals of the light barriers (15), in which at least one storage region of the value document container provided at the preparation station the value documents of the respective deposit were inserted.

13. The arrangement according to any of claims 1 to 10, **characterized in that** the monitoring device includes at least one distance sensor (25), in the capture region of which an input side of a value document container (100) provided at the preparation station (70) is located and which is arranged at a container end of the value document container provided at the preparation station such that the storage regions have different distances from the distance sensor, and which is adapted to determine the distance of an object that has entered its capture region from the distance sensor, and the monitoring device is adapted to establish, on the basis of the determined distance, in which storage region of the value document container provided at the preparation station the value documents of the respective deposit were inserted.

14. A method for processing value documents (1), in particular by an arrangement according to any of the preceding claims, wherein at a preparation station a value document container (100) is provided which is subdivided into several storage regions for value documents, wherein each of the storage regions has assigned thereto a storage region identification, wherein at the preparation station the following steps are carried out:
- capturing a container identification (B1) of the value document container (100) with the aid of the monitoring device (5) or with the aid of a first capture device (6) or with the aid of a second capture device (14),
- capturing a first deposit identification (ID16) of a first deposit whose value documents are to be inserted into the value document container (100), with the aid of the monitoring device (5) or with the aid of the first capture device (6),
- removing the value documents of the first deposit from a delivery container (16) of the first deposit and inserting the value documents of the first deposit into at least one first storage region (AB1) of the value document container, wherein with the aid of the monitoring device (5, 15, 25) it is automatically captured into which storage regions or into which one of the storage regions of the value document container the value documents of the first deposit are inserted, and
- linking the first deposit identification (ID16) to the at least one storage region identification (AB1) of the at least one first storage region and to the container identification (B1) by a protocol device (3) which is connected to the monitoring device (5, 15, 25) and, where applicable, to the first and, where applicable, to the second capture device,
- capturing a second deposit identification of a second deposit whose value documents are to be inserted into the value document container, with the aid of the monitoring device (5) or with the aid of the first capture device (6),
- removing the value documents of the second deposit from a delivery container (17) of the second deposit and inserting the value documents of the second deposit into at least one second storage region of the value document container, wherein with the aid of the monitoring device (5, 15, 25) it is automatically captured into which storage regions or into which one of the storage regions of the container the value documents of the second deposit are inserted,
- linking the second deposit identification (ID17) to the at least one storage region identification (AB2, AB3) of the at least one second storage region and to the container identification (B1) by the protocol device (3),
wherein for further processing the value documents of the first and second deposit
- the value document container is transported to a value document processing apparatus (60),
- the protocol device (3) transmits linking information (V) to a control device (8, 18) connected to the protocol device (3) and/or to an accounting device (19) connected to the protocol device (3), on the basis of which the control device (8, 18) and/or the accounting device (19) can derive with which at least one storage region identification and with which container identification the first deposit identification (ID16) is linked and with which at least one storage region identification and which container identification the second deposit identification (ID17) is linked,
- the control device (8, 18) and/or the accounting device (19) uses the linking information (V) to assign the value documents removed from the respective storage region of the container to the first deposit or to the second deposit with the aid of the linking information (V).

15. The method according to claim 14, **characterized in**
- **that** the accounting device (19) connected to the protocol device (3) carries out an accounting of the value documents of the respective deposit on the basis of counting results of the value document processing apparatus (60) for the value documents removed from the respective storage region and on the basis of the assignment of these value documents to the respective deposit derived from the linking information, and/or
- **that** the control device (8, 18) connected to the protocol device (3) controls the input of the value documents of the first and second deposit into the value document processing apparatus (60) and/or the feed of the value documents of the first and second deposit inputted into the value document processing apparatus to a singling device (63) of the value document processing apparatus in dependence on the linking information (V).

## Revendications

1. Agencement destiné au traitement de documents de valeur (1) qui, avant leur traitement, sont insérés au moyen d'un dispositif de traitement de documents de valeur (60) à un emplacement de préparation (70) dans un réservoir à documents de valeur subdivisé en plusieurs zones de stockage pour documents de valeur, cependant que, à chacune des zones de stockage, une identification de zone de stockage est associée, cependant que l'agencement comporte :
- un équipement de surveillance (5, 15, 25) qui se trouve à l'emplacement de préparation (70) et est équipé pour saisir automatiquement dans quelle ou quelles premières zones de stockage du réservoir à documents de valeur les documents de valeur d'un premier dépôt qui ont été prélevés d'un premier réservoir de livraison sont insérés, et dans quelle ou quelles deuxièmes zones de stockage du réservoir à documents de valeur les documents de valeur d'un deuxième dépôt qui ont été prélevés d'un deuxième réservoir de livraison sont insérés,
- éventuellement un premier équipement de saisie (6) et éventuellement un deuxième équipement de saisie (14) qui se trouvent à l'emplacement de préparation,
cependant que l'équipement de surveillance (5) ou le premier équipement de saisie (6) est équipé pour saisir une première identification de dépôt (ID16) du premier dépôt et une deuxième identification de dépôt (ID17) du deuxième dépôt dont les documents de valeur doivent être insérés dans le réservoir à documents de valeur, et
cependant que l'équipement de surveillance (5) ou le premier équipement de saisie (6) ou le deuxième équipement de saisie (14) est équipé pour saisir une identification de réservoir (B1, B2) du réservoir à documents de valeur (100) agencé à l'emplacement de préparation, et
cependant que l'agencement comporte en outre :
un équipement de protocole (3) relié à l'équipement de surveillance (5) et éventuellement au premier équipement de saisie (6) et éventuellement au deuxième équipement de saisie (7), et
un équipement de commande (8, 18) relié à l'équipement de protocole (3) et/ou un équipement de décompte (19) relié à l'équipement de protocole (3),
cependant que l'équipement de protocole (3) est équipé pour générer et transmettre à l'équipement de commande (8, 18) et/ou à l'équipement de décompte (19) des informations de liaison (V) indiquant avec quelle au moins une identification de zone de stockage (AB1, AB2...) et avec quelle identification de réservoir (B1, B2) la première identification de dépôt (ID16) est liée, et avec quelle au moins une identification de zone de stockage (AB1, AB2...) et avec quelle identification de réservoir la deuxième identification de dépôt (ID17) est liée, et
cependant que l'équipement de commande (8, 18) et/ou l'équipement de décompte (19) est équipé pour, à l'aide des informations de liaison (V) transmises par l'équipement de protocole (3), associer respectivement au premier ou au deuxième dépôt les documents de valeur se trouvant dans la zone de stockage (AB1, AB2...) respective du réservoir à documents de valeur respectif.

2. Agencement selon la revendication 1, **caractérisé par**
- un équipement d'identification (4) qui se trouve au dispositif de traitement de documents de valeur (60) ou à un module d'introduction (10) du dispositif de traitement de documents de valeur et est équipé pour saisir et transmettre à l'équipement de commande (8, 18) l'identification de réservoir (B1, B2) du réservoir à documents de valeur (100), et
- un équipement de prélèvement (9) qui se trouve au dispositif de traitement de documents de valeur (60) ou à un module d'introduction (10) du dispositif de traitement de documents de valeur et est équipé pour le prélèvement des documents de valeur du réservoir à documents de valeur (100) et pour l'introduction des documents de valeur, prélevés du réservoir à documents de valeur, dans le dispositif de traitement de documents de valeur (60).

3. Agencement selon une la revendication 2, **caractérisé en ce que** l'équipement de décompte (19) est équipé pour, au moyen des résultats de comptage du dispositif de traitement de documents de valeur (60) pour les documents de valeur prélevés de la zone respective de stockage et au moyen de l'association, de ces documents de valeur au dépôt respectif, déduite des informations de liaison (V), effectuer un décompte des documents de valeur du dépôt respectif.

4. Agencement selon une des revendications précédentes, **caractérisé en ce que** l'équipement de commande (8, 18) est équipé pour commander en fonction des informations de liaison (V) l'introduction des documents de valeur du premier et deuxième dépôt dans le dispositif de traitement de documents de valeur (60) et/ou l'acheminement des documents de valeur du premier et deuxième dépôt introduits dans le dispositif de traitement de documents de valeur vers l'équipement de déliassage (63) du dispositif de traitement de documents de valeur, en particulier pour commander cela de telle façon que les documents de valeur du même dépôt prélevés de différentes zones de stockage du réservoir à documents de valeur sont regroupés ensemble lors de l'introduction ou de l'acheminement, mais que les documents de valeur du premier dépôt ne sont pas regroupés avec les documents de valeur du deuxième dépôt lors l'introduction et de l'acheminement.

5. Agencement selon une des revendications précédentes, **caractérisé en ce que** l'équipement de commande (8, 18) est équipé pour amener un équipement d'acheminement (65, 66) du dispositif de traitement de documents de valeur (60) à laisser séparés les uns des autres les documents de valeur du premier dépôt et les documents de valeur du deuxième dépôt lors de l'acheminement des documents de valeur du premier dépôt et du deuxième dépôt introduit subséquemment vers l'équipement de déliassage (63) du dispositif de traitement de documents de valeur, jusqu'à ce que le dernier document de valeur du premier dépôt ait été déliassé par l'équipement de déliassage.

6. Agencement selon une revendication de 2 à 5, **caractérisé en ce que** l'équipement de commande (8, 18) est équipé pour amener l'équipement de prélèvement (9) à prélever les documents de valeur du premier dépôt et du deuxième dépôt du réservoir à documents de valeur et à les insérer séparément les uns des autres dans un casier d'introduction (61) du dispositif de traitement de documents de valeur (60), en particulier que l'équipement de commande (8, 18) est équipé pour commander l'équipement de prélèvement (9) de telle façon que ce dernier met les documents de valeur du premier dépôt et du deuxième dépôt dans deux logements différents (65, 66) d'un équipement d'acheminement du dispositif de traitement de documents de valeur (60).

7. Agencement selon une des revendications de 2 à 6, **caractérisé en ce que** l'équipement de commande (8) est un équipement de commande de l'équipement de prélèvement et est équipé pour commander de telle façon l'équipement de prélèvement (9) pour le réservoir à documents de valeur dont l'équipement d'identification (4) a saisi l'identification de réservoir que l'équipement de prélèvement (9) effectue l'introduction des documents de valeur dans le dispositif de traitement de documents de valeur (60) en fonction des informations de liaison (V), cependant que l'équipement de prélèvement (9) regroupe ensemble, lors de l'introduction dans le dispositif de traitement de documents de valeur, tous les documents de valeur du premier dépôt qu'il prélève éventuellement de différentes zones de stockage du réservoir à documents de valeur, et regroupe ensemble, lors de l'introduction dans le dispositif de traitement de documents de valeur, tous les documents de valeur du deuxième dépôt qu'il prélève éventuellement de différentes zones de stockage du réservoir à documents de valeur, et les réunit en une seule pile de documents de valeur mais les introduit dans le dispositif de traitement de documents de valeur séparément des documents de valeur du premier dépôt.

8. Agencement selon une des revendications de 2 à 7, **caractérisé en ce**
- **que** l'équipement d'acheminement de documents de valeur du dispositif de traitement de documents de valeur comporte au moins deux logements (65, 66) pour l'acheminement de documents de valeur vers l'équipement de déliassage (63), et
- **que** le un équipement de prélèvement (9) est équipé pour le prélèvement des documents de valeur du réservoir à documents de valeur et pour la mise des documents de valeur sur les deux logements (65, 66) de l'équipement d'acheminement de documents de valeur du dispositif de traitement de documents de valeur, et
- **que** l'équipement de commande (8, 18) de l'équipement de prélèvement (9) commande de telle façon l'équipement de prélèvement (9) que l'équipement de prélèvement effectue la mise des documents de valeur sur les deux logements (65, 66) en fonction des informations de liaison (V), cependant que tous les documents de valeur du premier dépôt qui sont éventuellement prélevés de différentes zones de stockage du réservoir à documents de valeur sont regroupés ensemble et réunis en une seule pile de documents de valeur lors de la mise sur le premier logement (65), et tous les documents de valeur du deuxième dépôt qui sont éventuellement prélevés de différentes zones de stockage du réservoir à documents de valeur sont regroupés ensemble et réunis en une seule pile de documents de valeur lors de la mise sur le deuxième logement (66), et
- **que** l'équipement d'acheminement de documents de valeur est équipé pour acheminer séparément les uns des autres à l'équipement de déliassage du dispositif de traitement de documents de valeur les documents de valeur mis sur les deux logements (65, 66).

9. Agencement selon une des revendications de de 2 à 6, caractérisé en ce l'équipement de commande est un équipement de commande (18) de l'équipement d'acheminement du dispositif de traitement de documents de valeur (60) qui est équipé pour commander de telle façon l'équipement d'acheminement (65, 66) en fonction des informations de liaison (V) que les documents de valeur du même dépôt qui ont été prélevés de différentes zones de stockage du réservoir à documents de valeur à l'aide de l'équipement de prélèvement (9) et insérés séparément les uns des autres dans le dispositif de traitement de documents de valeur sont regroupés ensemble et réunis en une seule pile de documents de valeur à l'aide de l'équipement d'acheminement (65, 66).

10. Agencement selon la revendication 9, caractérisé en ce l'équipement d'acheminement du dispositif de traitement de documents de valeur comporte au moins deux logements (65, 66) pour l'acheminement de documents de valeur à l'équipement de déliassage, et l'équipement de commande (18) de l'équipement d'acheminement commande de telle façon l'équipement d'acheminement que, par l'équipement d'acheminement, en fonction des informations de liaison (V), des documents de valeur qui ont été prélevés de différentes zones de stockage du réservoir à documents de valeur sont réunis en une seule pile de documents de valeur dans le cas où ces documents de valeur appartiennent au même dépôt, et ne sont pas réunis en une seule pile de documents de valeur dans le cas où ces documents de valeur appartiennent à différents dépôts.

11. Agencement selon une des revendications précédentes, caractérisé en ce l'équipement de surveillance comporte une caméra (5) et un équipement de commande et d'évaluation (13) relié à la caméra (5), lequel est équipé pour
- amener la caméra (5) à, avant et après l'insertion des documents de valeur du dépôt respectif dans le réservoir à documents de valeur mis à disposition à l'emplacement de préparation, capturer respectivement au moins une image du réservoir à documents de valeur (100), et
- pour chaque dépôt inséré, effectuer une analyse d'image différentielle, dans laquelle, à l'aide de différences entre les images du réservoir à documents de valeur capturées avant et après l'insertion des documents de valeur, il est établi dans quelle au moins une zone de stockage du réservoir à documents de valeur mis à disposition à l'emplacement de préparation les documents de valeur du dépôt respectif ont été insérés.

12. Agencement selon une des revendications de 1 à 10, caractérisé en ce l'équipement de surveillance comporte un rideau de barrière lumineuse composé d'une pluralité de barrières lumineuses (15) dans la zone de saisie desquelles se trouve un côté d'introduction d'un réservoir à documents de valeur (100) mis à disposition à l'emplacement de préparation (70), et l'équipement de surveillance est équipé pour, à l'aide de signaux des barrières lumineuses (15), établir dans quelle au moins une zone de stockage du réservoir à documents de valeur mis à disposition à l'emplacement de préparation les documents de valeur du dépôt respectif ont été insérés.

13. Agencement selon une des revendications de 1 à 10, **caractérisé en ce que** l'équipement de surveillance comporte au moins un capteur d'espacement (25) dans la zone de saisie duquel se trouve un côté d'introduction d'un réservoir à documents de valeur (100) mis à disposition à l'emplacement de préparation (70) et qui est agencé de telle façon à une extrémité de réservoir du réservoir à documents de valeur mis à disposition à l'emplacement de préparation que les zones de stockage ont différents espacements du capteur d'espacement, et qui est équipé pour déterminer l'espacement d'un objet entré dans sa zone de saisie par rapport au capteur d'espacement, et l'équipement de surveillance est équipé pour, à l'aide de l'espacement déterminé, établir dans quelle zone de stockage du réservoir à documents de valeur mis à disposition à l'emplacement de préparation les documents de valeur du dépôt respectif ont été insérés.

14. Procédé de traitement de documents de valeur (1), en particulier par un agencement suivant une des revendications précédentes, cependant que, à un emplacement de préparation, un réservoir à documents de valeur (100) est mis à disposition, lequel est subdivisé en plusieurs zones de stockage pour documents de valeur, cependant que, à chacune des zones de stockage, une identification de zone de stockage est associée, cependant que, à l'emplacement de préparation, les étapes suivantes sont effectuées :
- saisie d'une identification de réservoir (B1) du réservoir à documents de valeur (100) à l'aide d'un équipement de surveillance (5) ou à l'aide d'un premier équipement de saisie (6) ou à l'aide d'un deuxième équipement de saisie (14),
- saisie d'une première identification de dépôt (ID16) d'un premier dépôt dont les documents de valeur doivent être insérés dans le réservoir à documents de valeur (100), à l'aide de l'équipement de surveillance (5) ou à l'aide du premier équipement de saisie (6),
- prélèvement des documents de valeur du premier dépôt d'un réservoir de livraison (16) du premier dépôt, et insertion des documents de valeur du premier dépôt dans au moins une première zone de stockage (AB1) du réservoir à documents de valeur, cependant que, à l'aide de l'équipement de surveillance (5, 15, 25), il est automatiquement saisi dans laquelle ou lesquelles des zones de stockage du réservoir à documents de valeur les documents de valeur du premier dépôt ont été insérés, et
- liaison de la première identification de dépôt (ID16) avec la au moins une identification de zone de stockage (AB1) de la au moins une première zone de stockage et avec l'identification de réservoir (B1) par un équipement de protocole (3) relié à l'équipement de surveillance (5, 15, 25) et éventuellement au premier et éventuellement au deuxième équipement de saisie,
- saisie d'une deuxième identification de dépôt d'un deuxième dépôt dont les documents de valeur doivent être insérés dans le réservoir à documents de valeur, à l'aide de l'équipement de surveillance (5) ou à l'aide du premier équipement de saisie (6),
- prélèvement des documents de valeur du deuxième dépôt d'un réservoir de livraison (17) du deuxième dépôt, et insertion des documents de valeur du deuxième dépôt dans au moins une deuxième zone de stockage du réservoir à documents de valeur, cependant que, à l'aide de l'équipement de surveillance (5, 15, 25), il est saisi automatiquement dans quelle ou quelles des zones de stockage du réservoir les documents de valeur du deuxième dépôt sont insérés,
- liaison de la deuxième identification de dépôt (ID17) avec la au moins une identification de zone de stockage (AB2, AB3) de la au moins une deuxième zone de stockage et avec l'identification de réservoir (B1) par l'équipement de protocole (3),
- cependant que, pour le traitement ultérieur des documents de valeur du premier et du deuxième dépôt,
- le réservoir à documents de valeur est transporté à un dispositif de traitement de documents de valeur (60),
- l'équipement de protocole (3) transmet à un équipement de commande (8, 18) relié à l'équipement de protocole (3) et/ou à un équipement de décompte (19) relié à l'équipement de protocole (3) des informations de liaison (V) au moyen desquelles l'équipement de commande (8, 18) et/ou l'équipement de décompte (19) peut déduire avec quelle au moins une identification de zone de stockage et avec quelle identification de réservoir la première identification de dépôt (ID16) est liée, et avec quelle au moins une identification de zone de stockage et avec quelle identification de réservoir la deuxième identification de dépôt (ID17) est liée,
- l'équipement de commande (8, 18) et/ou l'équipement de décompte (19) utilise les informations de liaison (V) pour, à l'aide des informations de liaison (V), associer au premier dépôt ou au deuxième dépôt les documents de valeur prélevés de la zone respective de stockage du réservoir.

15. Procédé selon la revendication 14, **caractérisé en ce que** l'équipement de décompte (19) relié à l'équipement de protocole (3) effectue, au moyen de résultats de comptage du dispositif de traitement de documents de valeur (60) pour les documents de valeur prélevés de la zone respective de stockage et au moyen de l'association, de ces documents de valeur au dépôt respectif, déduite des informations de liaison, un décompte des documents de valeur du dépôt respectif, et/ou
- que l'équipement de commande (8, 18) relié à l'équipement de protocole (3) commande en fonction des informations de liaison (V) l'introduction des documents de valeur du premier et deuxième dépôt dans le dispositif de traitement de documents de valeur (60) et/ou l'acheminement des documents de valeur du premier et deuxième dépôt introduits dans le dispositif de traitement de documents de valeur vers un équipement de déliassage (63) du dispositif de traitement de documents de valeur.
